(19) Europäisches Patentamt / European Patent Office / Office européen des brevets

(11) **EP 2 887 726 B1**

(12) **EUROPEAN PATENT SPECIFICATION**

(45) Date of publication and mention of the grant of the patent:
**23.10.2019 Bulletin 2019/43**

(21) Application number: **13829313.9**

(22) Date of filing: **31.07.2013**

(51) Int Cl.:
*H04W 24/10* *(2009.01)*     *H04W 24/08* *(2009.01)*
*H04W 84/10* *(2009.01)*

(86) International application number:
**PCT/CN2013/080532**

(87) International publication number:
**WO 2014/026546 (20.02.2014 Gazette 2014/08)**

(54) **LAYER 2 MEASUREMENT AND RESULT PROCESSING METHOD AND DEVICE UNDER HETEROGENEOUS NETWORK**

SCHICHT-2-MESSUNG SOWIE ERGEBNISVERARBEITUNGSVERFAHREN UND -VORRICHTUNG IN EINEM HETEROGENEN NETZWERK

MESURE DE COUCHE 2 ET PROCÉDÉ ET DISPOSITIF DE TRAITEMENT DES RÉSULTATS SOUS RÉSEAU HÉTÉROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2012 CN 201210295666**

(43) Date of publication of application:
**24.06.2015 Bulletin 2015/26**

(73) Proprietor: **China Academy of Telecommunications Technology Haidian District Beijing 100191 (CN)**

(72) Inventors:
• **ZHANG, Dajun**
  **Beijing 100191 (CN)**
• **ZHAO, Yali**
  **Beijing 100191 (CN)**

(74) Representative: **Körfer, Thomas et al Mitscherlich PartmbB Patent- und Rechtsanwälte Sonnenstrasse 33 80331 München (DE)**

(56) References cited:
WO-A1-2012/027899     WO-A2-2012/061680
GB-A- 2 486 727       US-A1- 2010 197 298

• **"3rd Generation Partnership Project; Technical Specification Group Radio Access Network; Evolved Universal Terrestrial Radio Access (E-UTRA); Layer 2 - Measurements (Release 10)"**, 3GPP DRAFT; 36314-A20, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 28 September 2011 (2011-09-28), XP050905134, Retrieved from the Internet: URL:http://www.3gpp.org/ftp/Specs/2014-12/Rel-10/36_series [retrieved on 2011-09-28]
• MOTOROLA: **"HeNB Interference Management"**, 3GPP DRAFT; R1-100184 - HENB INTERFERENCE MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118 - 20100122, 12 January 2010 (2010-01-12), XP050597934, [retrieved on 2010-01-12]
• CATT: **"Scenarios analysis and key study aspects consideration for heterogeneous networks"**, 3GPP DRAFT; R1-094134, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388605, [retrieved on 2009-10-08]

**Description**

**Field of the Invention**

The present invention relates to the field of wireless communications, and particularly to a layer 2 measurement and a result processing method and device under a heterogeneous network.

**Background of the Invention**

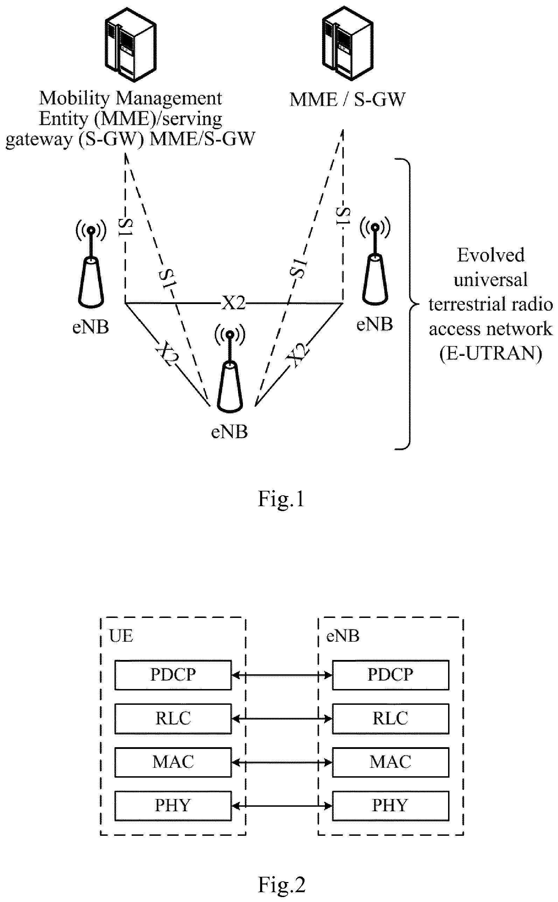

The network architecture of an Evolved Universal Terrestrial Radio Access Network (E-UTRAN) is as shown in Fig. 1, and the E-UTRAN is composed of Evolved Node Bs (eNB)s.

A Mobility Management Entity (MME) is connected with an eNB through an S1-MME interface; the eNB completes an access network function and communicates with a User Equipment (UE) through an air interface. For each UE attached to the network, one MME provides service to the UE, and the MME is called a serving MME of the UE. The S1-MME interface provides a control plane service for the UE, including mobility management and bearer management functions.

A serving gateway (Serving GW, S-GW) is connected with the eNB through an S1-U interface, for each UE attached to the network, one S-GW provides service to the same, and the S-GW is called a S-GW of the UE. The S1-U interface provides a user plane service for the UE, and the user plane data of the UE are transmitted between the S-GW and the eNB through an S1-U GPRS Tunneling Protocol (GTP) bearer.

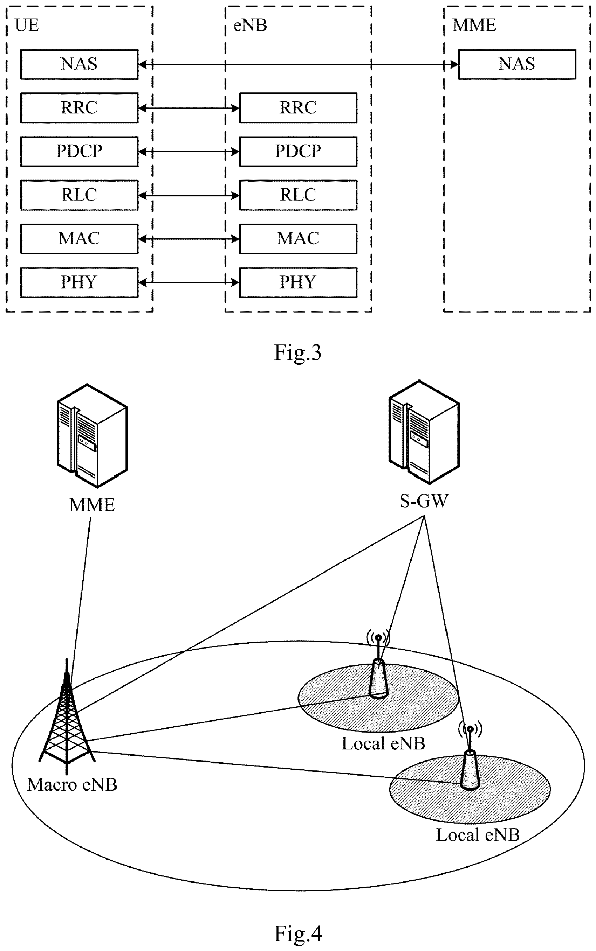

The user plane and control plane protocol stacks between the UE and the network are respectively as shown in Fig. 2 and Fig. 3. The user plane protocol stack includes a Packet Data Convergence Protocol (PDCP) layer, a Radio Link Control (RLC) layer, a Medium Access Control (MAC) layer and a physical (PHY) layer; the control plane protocol stack includes a Radio Resource Control (RRC) layer and a Non-Access Stratum (NAS) layer, herein an RRC layer message needs to be processed by a user plane protocol layer and is transmitted over the air interface; an NAS layer message is encapsulated in the RRC message at the air interface for transmission and is transmitted over S1 connection through the S1-MME interface.

In an existing Long Term Evolution (LTE)/Long Term Evolution-Advanced (LTE-A) network, all of RRC, PDCP, RLC, MAC and PHY peer layers of the UE are located in the same eNB, and an NAS peer layer of the UE is located in the MME established with the above eNB an S1 connection for the UE.

In the existing protocol, PDCP and RLC entities correspond to a Data Radio Bearer (DRB), a Signalling Radio Bearer (SRB) 1 and an SRB2, each DRB, SRB1 and SRB2 respectively correspond to a set of PDCP and RLC entities; the DRB, the SRB1 and the SRB2 are converged at the MAC layer. Therefore, UE will have multiple sets of PDCP and RLC entities at the same time, but only has one MAC layer and physical layer entity.

In the LTE network, for the purpose of load balancing or monitoring network performance of Operations, Administration and Maintenance (OAM), the eNB needs to measure the average utilization rate of a Physical Resource Block (PRB) thereof, the number of active UEs, packet delay, packet loss rate, scheduling throughput and the like according to certain measurement configuration, and a measurement result is reported to the OAM, for enabling the OAM to master the network performance, adjust the parameters, optimize the network configuration and the like; the measurement result may also be transmitted between the eNBs, to achieve the purposes of load balancing and resource report, in order to reduce the mutual interference, improve the resource utilization rate and improve the total performance of the system.

The measurement quantity of layer 2 (L2) measurement defined in the existing E-UTRAN is as follows:

Firstly, PRB usage;
the PRB usage is divided into total PRB usage and PRB usage per QCI. The usage of a time-frequency domain resource is measured in the measurement quantity and is mainly used by load balancing for interacting PRB use information between the eNBs through an X2 interface or used by the OAM for monitoring performance.
Secondly, Received Random Access Preambles;
the number of various preambles received per second is counted, which is mainly used for optimizing RACH configuration.
Thirdly, Number of active UEs;
the number of active UEs of each QCI is measured and is respectively counted for uplink and downlink, the measurement quantity is used as a parameter for calculating the available bit rate of the active UEs. The specific statistical approach is as follows:
downlink (DL): counting the number of UEs having DL DRB per QCI and corresponding to non-empty buffer (including PDCP/RLC/MAC) at each sampling moment within a time T, then summing each sampling result within the time T and dividing the time T.

Uplink (UL): the statistical approach being the same as that of DL, and estimating data buffer according to BSR.

Fourthly, downlink (DL) Packet delay;

the end-to-end transmission delay of a layer 2 data packet of each QCI is measured for OAM performance monitoring. The specific statistical approach is as follows: counting the difference value of a receiving moment and a sending moment of each PDCP SDU having the same QCI within the time T, and then averaging the difference values of the receiving moments and the sending moments of all PDCP SDUs.

The downlink receiving moment is: the time when the last piece of the PDCP SDU is successfully received by the UE according to MAC HARQ feedback information.

The downlink sending moment is: the time of the PDCP SDU arriving at the PDCP upper SAP.

Fifthly, Data Loss;

the data packet loss rate may be subdivided into three measurement quantities:

1, Packet Discard Rate in the DL per QCI

the packet discard rate in the DL per QCI is used for counting the packet loss rate of downlink PDCP SDU per QCI due to congestion queue management, and is used for monitoring OAM performance. The specific statistical approach is as follows:

counting other data packets discarded without being transmitted except being switched within the time T, including the one discarded at the PDCP/MAC/RLC layer.

2, Packet Uu Loss Rate in the DL per QCI

the packet Uu loss rate in the DL per QCI is used for counting the PDCP SDU data packets discarded in Uu transmission, and is used for monitoring OAM performance. The statistical approach is as follows: based on QCI statistics, counting the PDCP SDU.

The ratio of data packets, which are transmitted over the air interface, but are not correctly received and are not retransmitted within the time T, to data packets (correctly received and not correctly received), which are collectively transmitted at the QCI over the air interface within this time period, is counted.

Since the data are too small, a denominator is multiplied by 1000000 to serve as a statistical result.

3, Packet Loss Rate in the UL per QCI

the packet loss rate in the UL per QCI is used for counting data packets lost in the UL and is used for monitoring OAM performance. The statistical approach is as follows:

counting the ratio of the number of missing UL PDCP SDUs per QCI within the time T to the total UL PDCP SDU within the time T (counting from the SN of the UL PDCP SDU first submitted to the high level at a T beginning moment to the last submitted PDCP SN).

Since the data are too small, a denominator is multiplied by 1000000 to serve as a statistical result.

Sixthly, Scheduled IP throughput;

the scheduled IP throughput of each UE at each QCI is measured, including no initial buffer time and distinguishing UL/DL statistics.

Statistics show that, the monolayer coverage network of a traditional Macro eNB has been incapable of satisfying the growing demands of people on data service rates and capacity. Therefore, a hierarchical networking manner is introduced into the 3rd Generation Partnership Project (3GPP) to solve the problem, namely, some low power base stations, i.e., Local eNBs, including such forms as a home base station (Femto)/a micro base station (Pico)/ a relay device (Relay) and the like in such small-coverage environments as a hotspot zone, a home indoor environment, an office environment and the like, in order to obtain a cell division effect and enable operators to provide services with higher data rates and lower cost for users. On the basis of the E-UTRAN architecture, if the hierarchical networking is introduced, then the deployment scenario of a new heterogeneous network (HetNet) including the Local eNB and the Macro eNB is as shown in Fig. 4, wherein the Macro eNB provides primary coverage, the Local eNB provides hotspot coverage, a data/signalling interface (wired/wireless interface) exists between the Local eNB and the Macro eNB, and the UE may work under the Macro eNB or the Local eNB.

Due to the small coverage of and less UEs served by a cell controlled by the Local eNB, so the UE connected to the Local eNB may often obtain better quality of service, for example, obtaining a higher service rate and a link with higher quality. Therefore, when the UE connected to the Macro eNB is close to the cell controlled by the Local eNB, the UE may be switched to the Local eNB to obtain the service provided by the Local eNB; when the UE is away from the cell controlled by the Local eNB, the UE needs to be switched to a cell controlled by the Macro eNB, in order to keep wireless connection. Due to the large number and small coverage of the Local eNB, the UE needs to be frequently switched between the cell of the Macro eNB and the cell of the Local eNB. In order to avoid data transmission interruption resulting from frequent switch, one way is to enable the UE to simultaneously aggregate the resources of the Local eNB and the Macro eNB, but RRC connection is maintained under the Macro eNB, and the Local resources are only applied to data transmission, i.e., bearer separation.

Bearer separation has multiple network architecture designs, wherein one architecture is as shown in Fig. 5, the corresponding user plane and control plane protocol stacks are as shown in Fig. 6; and another architecture is as shown in Fig. 7.

In GB 2 486 727 A, it is disclosed a number of enhanced measurement protocols that take into account the presence of relay nodes (RN) 12 in a cell and the remote UEs (R-UE) 14 that are connected to the RNs. The treatment of the RN depends upon the particular network characteristic being measured. For some measurements the RN can be approximated as a macro UE (M-UE) 16 directly connected to the donor eNodeB (D-eNB) 10 and for other the R-UE must be specifically considered.

The article named "3rd Generation Partnership Project; Technical Specification Group Radio Access Network; Evolved Universal Terrestrial Radio Access (E-UTRA); Layer-2 Measurements (Release 10)", 3GPP DRAFT; FRANCE, 28 September 2011, relates to measuring a number of Layer 2 (L2) network characteristics. These include Physical Resource Block (PRB) usage, received Random Access Preambles, number of active User Equipments (UE), packet delay, data loss and scheduled IP throughput.

To sum up, under the HetNet scenario, a part of DRBs of the UE may be located under the Local eNB, in this way, the current L2 measurement technology could not be implemented or the measurement is not accurate enough, thus the system performance of the Local eNB could not be timely and accurately monitored.

## Summary of the Invention

The present invention is defined by the independent claims 1, 4 and 13. Preferred embodiments are defined by the dependent claims.

Embodiments of the present invention provide a layer 2 measurement and a result processing method and device under a heterogeneous network, which are used for solving the problem of how to perform layer 2 measurement under the heterogeneous network.

A layer 2 measurement method under a heterogeneous network in which a UE simultaneously aggregates resources of the Local eNB, and a Macro eNB, Radio Resource Control, RRC, connection of the UE is maintained under the Macro eNB, and the resources of the Local eNB are applied to data transmission, performed by a Local Evolved Node B, including:

performing, by the local Evolved Node B, Local eNB, layer 2 measurement according to a measurement request of performing layer 2 measurement, after receiving the measurement request of performing layer 2 measurement; reporting, by the Local eNB, a measurement result of the layer 2 measurement to a processing entity which sends the measurement request of performing layer 2 measurement.

A layer 2 measurement method under a heterogeneous network in which a UE simultaneously aggregates resources of a Local Evolved Node B, eNB, and a Macro eNB, Radio Resource Control, RRC, connection of the UE is maintained under the Macro eNB, and the resources of the Local eNB are applied to data transmission, including:

sending, by the processing entity, a measurement request of performing layer 2 measurement to the Local eNB; receiving, by the processing entity, a measurement result reported by the local eNB and the measurement result is obtained by performing the layer 2 measurement according to the measurement request of performing layer 2 measurement; processing, by the processing entity, the measurement result.

A Local eNB, under a heterogeneous network in which a UE simultaneously aggregates resources of the Local eNB, and a Macro eNB, Radio Resource Control, RRC, connection of the UE is maintained under the Macro eNB, and the resources of the Local eNB are applied to data transmission, including:

a receiving component, configured to receive a measurement request of performing layer 2 measurement; a measuring component, configured to perform layer 2 measurement according to the measurement request of performing layer 2 measurement; a reporting component, configured to report a measurement result of the layer 2 measurement to a processing entity which sends the measurement request of performing layer 2 measurement.

In the solutions provided by embodiments of the present invention, the processing entity sends the measurement request of performing the layer 2 measurement to the Local eNB, after receiving the measurement request, the Local eNB performs the layer 2 measurement according to the measurement request and reports the measurement result of the layer 2 measurement to the processing entity which sends the measurement request, the processing entity receives the measurement result reported by the local eNB and the measurement result is obtained by performing the layer 2 measurement according to the measurement request, and processes the measurement result. Thus it can be seen that, in the present invention, by means of the measurement and report of the Local eNB, the method of performing the layer 2 measurement under the heterogeneous network including the Local eNB and a Macro eNB is achieved.

**Brief Description of the Drawings**

Fig. 1 is a schematic diagram of an E-UTRAN network architecture in the prior art;
Fig. 2 is a schematic diagram of a user plane protocol stack in the prior art;
Fig. 3 is a schematic diagram of a control plane protocol stack in the prior art;
Fig. 4 is a schematic diagram of a deployment scenario of a hierarchical network in the prior art;

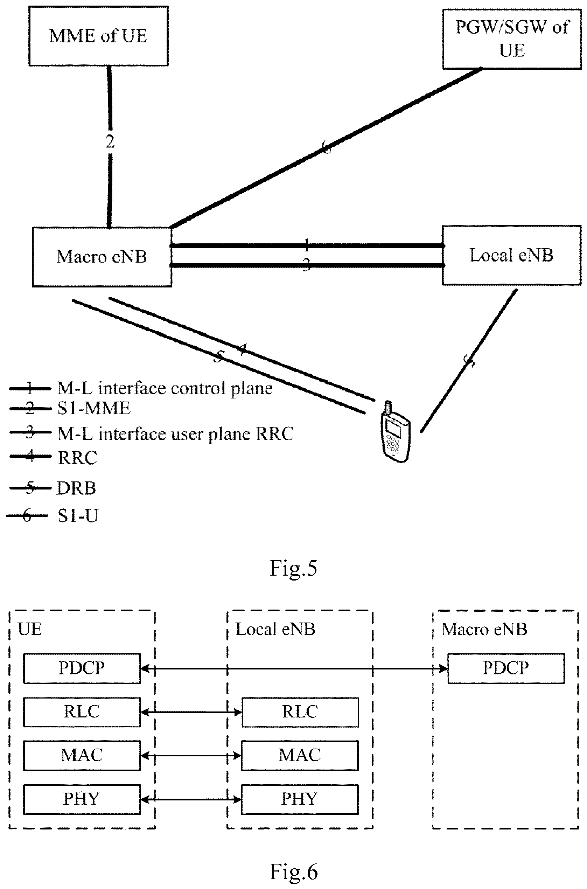

Fig. 5 is a schematic diagram of a architecture in which a control plane is separate from a user plane in the prior art;
Fig. 6 is a schematic diagram of structure of a protocol stack corresponding to Fig. 5 in the prior art;

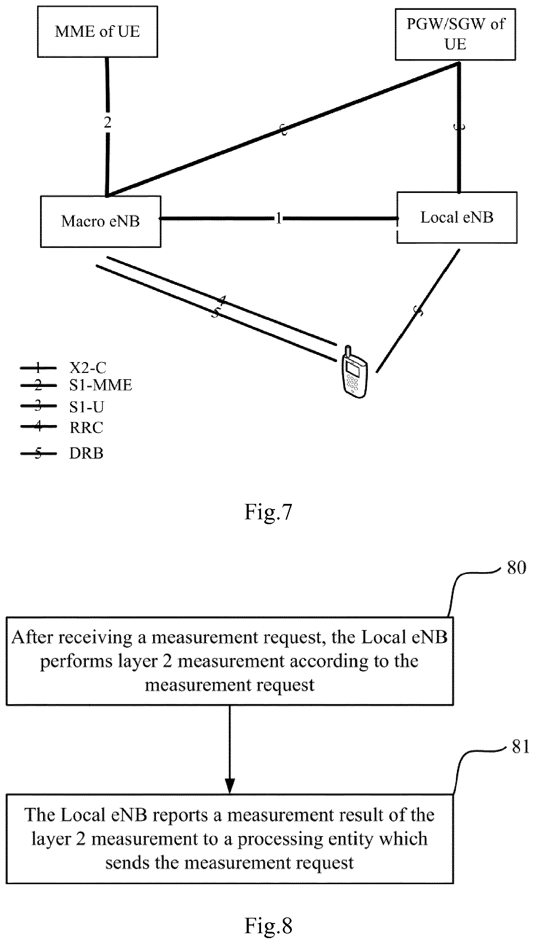

Fig. 7 is a schematic diagram of another architecture in which a control plane is separate from a user plane in the prior art;
Fig. 8 is a flow diagram of a method provided by an embodiment of the present invention;

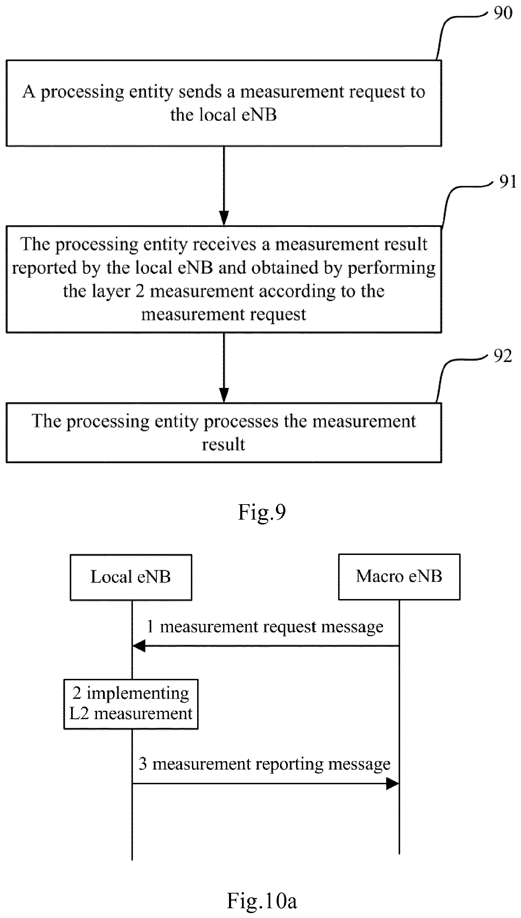

Fig. 9 is a flow diagram of another method provided by an embodiment of the present invention;
Fig. 10a is a flow diagram of measurement requested by a Macro eNB in an embodiment of the present invention;

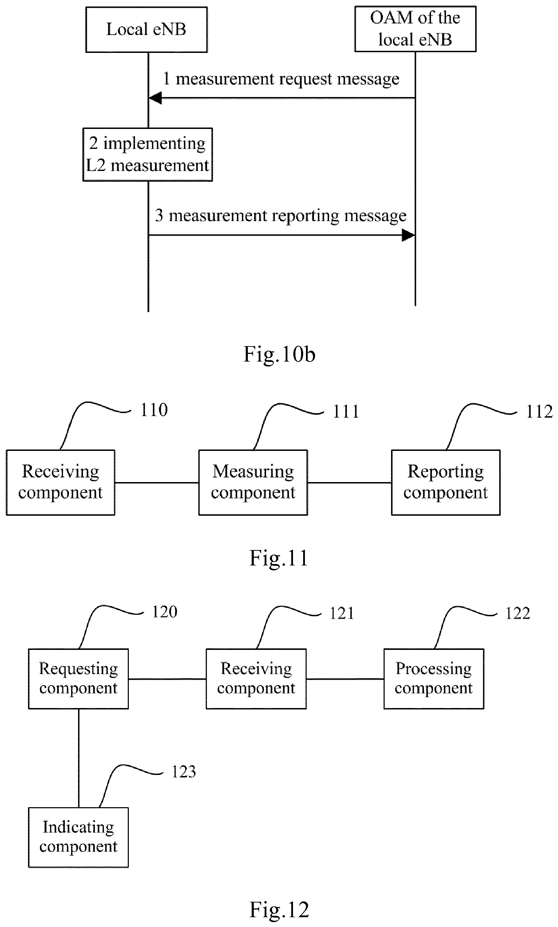

Fig. 10b is a flow diagram of measurement requested by an OAM in an embodiment of the present invention;
Fig. 11 is a schematic diagram of structure of a Local eNB provided by an embodiment of the present invention;
Fig. 12 is a schematic diagram of structure of a processing device provided by an embodiment of the present invention.

**Detailed Description of the Embodiments**

To solve the problem of how to perform layer 2 measurement under a heterogeneous network, an embodiment of the present invention provides a layer 2 measurement method under a heterogeneous network.
See Fig. 8, the layer 2 measurement method under the heterogeneous network provided by an embodiment of the present invention includes the following operations:

operation 80: a Local eNB performs a layer 2 measurement according to a measurement request, after receiving the measurement request;
operation 81: the Local eNB reports a measurement result of the layer 2 measurement to a processing entity which sends the measurement request.

Preferably, the measurement request may include at least one of the following information:

a measurement identifier, a measurement object, a measurement quantity, or a measurement reporting mode, herein the measurement identifier is used for uniquely identifying a measurement; the measurement object indicates the object of the layer 2 measurement; the measurement quantity indicates contents needing to be measured; the measurement reporting mode indicates the mode of reporting the measurement result.

Specifically, the object of the layer 2 measurement may be a terminal, an Evolved Radio Access Bearer (E-RAB) or a cell. The mode of reporting the measurement result may be immediate reporting or periodical reporting or event trigger reporting.
Specifically, the measurement quantity when the Local eNB performs the layer 2 measurement may include at least one of the following measurement quantities: Scheduled IP throughput, Data Loss, Number of active UEs, downlink packet delay (DL Packet delay), physical resource block (PRB) usage, or number of Received Random Access Preambles.
If the measurement quantity of the layer 2 measurement performed by the Local eNB includes the Scheduled IP throughput, the method of measuring the Scheduled IP throughput by the Local eNB may be as follows:

for each QCI, the Local eNB counts the amount of data of a PDCP Protocol Data Unit (PDU) scheduled within a preset time at an RLC layer, and counts the scheduled time of the PDCP PDU at the MAC layer, with an upper service access point (SAP) of an MAC layer as a time reference point, in order to obtain the Scheduled IP throughput according to the counted amount of data and the scheduled time; or
for each QCI, the Local eNB counts the scheduled time of a PDCP Service Data Unit (SDU) within the preset time at the MAC layer, with the upper SAP of the MAC layer as the time reference point, in order to obtain the Scheduled IP throughput according to the counted scheduled time and the actual amount of data of each PDCP SDU indicated by a Macro eNB. Reference may be made to the first embodiment in detail.

If the measurement quantity of the layer 2 measurement performed by the Local eNB includes the Data Loss, the method of measuring the Data Loss by the Local eNB may be as follows:

measuring the packet discard rate in the downlink (DL) per QoS (Quality of Service) Class Identifier (QCI) according to the following method: counting the packet loss rate of PDCP PDU packet loss due to congestion within the preset time per QCI, with the upper SAP of the RLC layer as the time reference point; and/or, measuring the Packet Uu Loss Rate in the DL per QCI according to the following method: counting the packet loss rate of the PDCP PDU transmitted over a Uu interface within the preset time per QCI, with the upper SAP of the RLC layer as the time reference point. Specific reference may be made to the second embodiment.

If the measurement quantity of the layer 2 measurement performed by the Local eNB includes the Number of active UEs, the method of measuring the Number of active UEs by the Local eNB may be as follows:

for each QCI, the Local eNB counts the number of uplink active terminals separated at the Local eNB within the preset time at the MAC layer; and/or, for each QCI, the Local eNB counts the number of downlink active terminals separated at the Local eNB within the preset time at the MAC layer. Specific reference may be made to the third embodiment.

Herein, the uplink active terminal separated at the Local eNB refers to a terminal, in which an uplink buffer of a corresponding PDCP layer/RLC layer/MAC layer is not empty, and a part of DRBs of the terminal is located at the Local eNB and the other part of DRBs is located at the Micro eNB. The downlink active terminal separated at the Local eNB refers to a terminal, in which a downlink buffer of a corresponding PDCP layer/RLC layer/MAC layer is not empty, and a part of DRBs of the terminal is located at the Local eNB and the other part of DRBs is located at the Micro eNB.

Preferably, when reporting the measurement result of the Number of active UEs to the processing entity which sends the measurement request, the Local eNB further reports the identifier information of the counted terminal to the processing entity which sends the measurement request, for enabling the processing entity to summarize the measurement result according to the identifier information of the terminal.

If the measurement quantity of the layer 2 measurement performed by the Local eNB includes the DL Packet delay, the method of measuring the DL Packet delay by the Local eNB may be as follows:
for each QCI, the Local eNB counts the transmission delay of the downlink PDCP SDU, with the upper SAP of the RLC layer as the time reference point when a data packet arrives and with the lower SAP of the MAC layer as the time reference point of successfully receiving the data packet. Specific reference may be made to the fourth embodiment.

If the measurement quantity of the layer 2 measurement performed by the Local eNB includes the PRB usage, the method of measuring the PRB usage by the Local eNB may be as follows:
the Local eNB counts the PRB usage within the preset time at the SAP between the MAC layer and a layer 1 (L1). Specific reference may be made to the fifth embodiment.

If the measurement quantity of the layer 2 measurement performed by the Local eNB includes the Received Random Access Preambles, the method of measuring the Received Random Access Preambles by the Local eNB may be as follows:
the Local eNB counts the number of the Preambles received within the preset time at the SAP between the MAC layer and the layer 1 (L1). Specific reference may be made to the sixth embodiment.

In the method, the processing entity which sends the measurement request may be a Macro eNB, or Operations, Administration and Maintenance (OAM), or the like..

See Fig. 9, an embodiment of the present invention provides a result processing method of layer 2 measurement under a heterogeneous network, including the following operations:

operation 90: a processing entity sends a measurement request of performing layer 2 measurement to a Local eNB; operation 91: the processing entity receives a measurement result reported by the local eNB and the measurement result is obtained by performing the layer 2 measurement according to the measurement request; operation 92: the processing entity processes the measurement result.

Preferably, the measurement request includes at least one of the following information:

a measurement identifier, a measurement object, a measurement quantity, or a measurement reporting mode,

herein the measurement identifier is used for uniquely identifying a measurement; the measurement object indicates the object of the layer 2 measurement; the measurement quantity indicates contents needing to be measured; the measurement reporting mode indicates the mode of reporting the measurement result.

Specifically, the object of the layer 2 measurement may be a terminal, an E-RAB or a cell. The mode of reporting the measurement result may be immediate reporting or periodical reporting or event trigger reporting.

Specifically, the measurement result may include the measurement result of at least one of the following measurement quantities: Scheduled IP throughput, Data Loss, Number of active UEs, DL Packet delay, PRB usage, Received Random Access Preambles.

Specifically, when the measurement result includes the measurement result of Packet Discard Rate in the DL per QCI and the processing entity is a Macro eNB, the operation of processing the measurement result by the processing entity may include:

according to the following formula 1, for each QCI, respectively counting the loss rate of PDCP SDU separating DRBs at a PDCP layer within a preset time, merging (e.g., adding) the calculated loss rate with the Packet Discard Rate in the DL per QCI corresponding to the same QCI in the measurement result, and using the merged value as the Packet Discard Rate in the DL of the separated DRBs on the Macro eNB:

$$\text{formula 1: M (T, qci)} = \left\lceil \frac{Ddisc(T,qci)*1000000}{N(T,qci)} \right\rceil ;$$

herein M (T, qci) refers to the downlink packet loss rate of the QCI within the time T; Ddisc (T, qci) refers to the number of downlink PDCP SDUs having not been transmitted by the QCI to the Local eNB and discarded within the time T; N (T, qci) refers to the number of all PDCP SDUs of the QCI entering the PDCP layer within the time T; T refers to a statistical time. Herein, the separated DRBs refer to the DRBs separated at the terminal of the Local eNB.

Specifically, when the measurement result includes no Packet Loss Rate in the UL per QCI, the operation of processing the measurement result by the processing entity may include:

the Macro eNB counts the packet loss rate of the uplink PDCP SDU within the preset time per QCI on the PDCP layer, with the upper SAP of the PDCP layer as a time reference point.

Further, when the processing entity is the Macro eNB, the Macro eNB may also count the number of uplink active terminals with all DRBs located in the Macro eNB and the number of uplink active terminals with a part of DRBs located in the Macro eNB within the preset time; and/or,

the Macro eNB counts the number of downlink active terminals with all DRBs located in the Macro eNB and the number of downlink active terminals with a part of DRBs located in the Macro eNB within the preset time.

The specific implementation method of counting, by the Macro eNB, the number of downlink active terminals with all DRBs located in the Macro eNB and the number of downlink active terminals with a part of DRBs located in the Macro eNB within the preset time may be as follows:

counting the number of the terminals with all DRBs located in the Macro eNB, and counting the number of the terminals, in which a part of DRBs is located in the Macro eNB and a downlink buffer of the corresponding PDCP layer or RLC layer or MAC layer per QCI on the part of DRBs located in the Macro eNB is not empty; or,
counting the number of the terminals with all DRBs located in the Macro eNB, and counting the number of the terminals, in which a part of DRBs is located in the Macro eNB, the downlink buffer of the corresponding PDCP layer or RLC layer or MAC layer per QCI on the part of DRBs located in the Macro eNB is not empty, and the downlink buffer of the corresponding PDCP layer per QCI on the part of DRBs located in the Macro eNB is not empty.

Specifically, the operation of processing the measurement result by the processing entity may include: when the received measurement result includes uplink Number of active UEs, the Macro eNB summarizes the received uplink Number of active UEs and the counted number of the uplink active terminals; the summarizing method is as follows: adding the received uplink Number of active UEs to the counted number of the uplink active terminals, and subtracting the number of the identical terminals counted by the Local eNB and the Macro eNB from the addition result, to obtain a summarized result value.

When the received measurement result includes downlink Number of active UEs, the Macro eNB summarizes the received downlink Number of active UEs with the counted number of the downlink active terminals. The summarizing method is as follows: adding the received downlink Number of active UEs to the counted number of the downlink active terminals, and subtracting the number of the identical terminals counted by the Local eNB and the Macro eNB from the addition result, to obtain a summarized result value.

Specifically, when the measurement result includes the measurement result of DL Packet delay and the processing entity is the Macro eNB, the operation of processing the measurement result by the processing entity may include: according to the following formula 2, counting the residence time of the PDCP SDU of the separated DRBs at the Macro eNB within the preset time, merging (e.g., adding) the calculated residence time, the DL Packet delay and the transmission delay of the interface between the Macro eNB and the Local eNB in the measurement result, and using the merged value as the DL Packet delay of the separated DRBs on the Macro eNB;

$$\text{formula 2: } M(T, qci) = \left[ \frac{\sum_{\forall i} tSend(i) - tArriv(i)}{I(T)} \right]$$

herein M (T, qci) refers to the residence time of the PDCP SDU of one QCI within the time T; tArriv (i) refers to the time point of the PDCP SDUi arriving at the upper SAP of the PDCP; tSend(i) refers to the time point when the PDCP SDUi is sent to the Local eNB; I(T) refers to the total number of the PDCP SDUs; T refers to a statistical time.

Preferably, when the processing entity is the Macro eNB, the Macro eNB carries the actual amount of data of the PDCP SDU of the PDCP PDU in each downlink PDCP PDU sent to the Local eNB;
for each uplink PDCP PDU reported by the Local eNB, the Macro eNB indicates the Local eNB about the actual amount of data of the PDCP SDU of the PDCP PDU.

When the processing entity is the Macro eNB, the entire flow of the present invention is as shown in Fig. 10a:

operation 1: the Macro eNB sends a measurement request message to the Local eNB;
operation 2: the Local eNB performs the layer 2 measurement according to the measurement request message;
operation 3: the Local eNB reports the measurement result of the layer 2 measurement to the Macro eNB through a measurement reporting message.

When the processing entity is the OAM, the entire flow of the present invention is as shown in Fig. 10b:

operation 1: the OAM sends a measurement request message to the Local eNB;
operation 2: the Local eNB performs the layer 2 measurement according to the measurement request message;
operation 3: the Local eNB reports the measurement result of the layer 2 measurement to the OAM through a measurement reporting message.

The measurement methods of various measurement quantities in the present invention will be illustrated below in combination with specific embodiments:

First embodiment:

A measurement method for a measurement quantity, Scheduled IP throughput, is illustrated in an embodiment; the measurement object of the measurement quantity may be a terminal, a cell or an E-RAB.

(1) Downlink:

method 1: for UE separated at a Local Cell, a Local eNB counts the Scheduled IP throughput measurement quantity according to each E-RAB of the UE separated therein, and since the PDCP in the architecture 1 as shown in Fig. 5 is located at a Macro eNB, the measurement quantity is counted at an RLC layer and an MAC layer, and the time reference point is an upper SAP of the MAC layer. The specific statistical approach is as follows: for a small data packet (i.e., all data of the data packet may be sent through one Hybrid Automatic Repeat reQuest (HARQ)), *ThpTimeDl* = 0, if not, *ThpTimeDl* = *T*1 - *T*2[*ms*], wherein the definitions of T1 and T2 are as shown in the following table 1:

Table 1

| T1 | A time point of receiving confirmation of the last data block but one in the data packet with transmitted PDCP PDU after T2 |
|---|---|
| T2 | The first sending time point after a PDCP PDU is available |

(continued)

| ThpVolDl | Calculated for the PDCP PDU at the RLC layer, a successfully sent amount of data excluding data sent at the last Transmission Timing Interval(TTI) during *ThpTimeDl* , with the unit of kbits |
|---|---|

The computational formula of the downlink Scheduled IP throughput counted within the time T is as follows:
if $\sum ThpTimeDl > 0$, then,

$$\text{Scheduled IP throughput} = \frac{\sum ThpVolDl}{\sum ThpTimeDl} \times 1000 \left[ \text{kbits} / \text{s} \right];$$

$$\text{if } \sum ThpTimeDl = 0, \text{ then, Scheduled IP throughput} = 0 \left[ \text{kbits} / \text{s} \right]$$

thereafter, the calculation result of the downlink Scheduled IP throughput is reported to the Macro eNB or the OAM to serve as the measurement result, and reporting information is distinguished with different UEs and different QCIs.

For the architecture 2 in which the PDCP is located at the Local eNB, as shown in Fig. 7, the time reference points for statistics and measurement are different from those in the prior art, soon afterwards, the Local eNB reports the measurement result to the Macro eNB or the OAM.

Method 2: the Macro eNB carries the actual amount of data of the PDCP SDU in each downlink PDCP PDU sent to the Local eNB, in this way, for the UE separated at the Local eNB, the Local eNB may combine the actual amount of data of the PDCP SDU (*Thp VolDl* in table 2) with the statistical result of the upper SAP of the MAC layer (T1 and T2 in table 2) to calculate the real downlink Scheduled IP throughput, and send the calculation result to the Macro eNB or the OAM to serve as the measurement result;

the computational formula is the same as the existing definition and is as follows:

for the small data packet, *ThpTimeDl* = 0, if not, *ThpTimeDl* = $T1 - T2[ms]$, wherein the definitions of T1 and T2 are shown in the following table 2:

Table 2

| T1 | A time point of receiving confirmation of the last but one data block in the data packet with transmitted PDCP SDU after T2 |
|---|---|
| T2 | The first sending time point after a PDCP SDU is available |
| *ThpVolDl* | Calculated according to the PDCP SDU, a successfully sent amount of data excluding data sent at the last TTI during *ThpTimeDl,* with the unit of kbits |

The computational formula of the downlink Scheduled IP throughput counted within the time T is as follows:
if $\sum ThpTimeDl > 0$, then,

$$\text{Scheduled IP throughput} = \frac{\sum ThpVolDl}{\sum ThpTimeDl} \times 1000 \left[ \text{kbits} / \text{s} \right];$$

$$\text{if } \sum ThpTimeDl = 0, \text{ then, Scheduled IP throughput} = 0 \left[ \text{kbits} / \text{s} \right]$$

(2) Uplink:

method 1: similar to method 1 of the downlink, the measurement quantity is counted by the RLC layer and the MAC layer, the reference point is the upper SAP of the MAC layer, and the specific statistical approach is similar to that of the downlink. It should be noted that, since uplink data are scheduled by the MAC layer of the Local eNB, the MAC layer may calculate the time point and determine which one is the last data block but one in combination with the PDCP PDU merged by the RLC layer;

method 2: similar to method 2 of the downlink, since the PDCP SDU may only be analyzed at the PDCP layer of Macro, the Macro eNB needs to indicate the Local eNB about the actual amount of data of the PDCP SDU in the PDCP PDU for each PDCP PDU reported by the Local eNB, and then, the Local eNB combines the actual amount of data of the PDCP SDU with the statistical result of the upper SAP of the MAC layer to calculate the real uplink Scheduled IP throughput, and sends the calculation result to the Macro eNB or the OAM to serve as the measurement result; the computational formula is similar to that of the downlink.

Second embodiment:

A measurement method for a measurement quantity, Data Loss, is illustrated in an embodiment; the measurement object of the measurement quantity may be a terminal, a cell or an E-RAB.

(1) A measurement method for Packet Discard Rate in the DL per QCI;

a) for UE separated at a Local eNB, the Local eNB only needs to count a packet loss rate (the PDCP PDU is not transmitted over a Uu interface) of PDCP PDU packet loss caused by congestion on an RLC layer/MAC layer within a preset time per QCI, the time reference point is an upper SAP of the RLC layer, soon afterwards, the Local eNB reports a measurement result to a Macro eNB or an OAM;

the computational formula of the Packet Discard Rate in the DL per QCI counted within a time T is as follows:

$$M\,(T, qci) = \left\lceil \frac{Ddisc(T, qci) * 1000000}{N(T, qci)} \right\rceil$$

herein the definitions of the parameters are shown in the following table 3:

Table 3

| M(T, qci) | Within the time T, the downlink packet loss rate of one QCI |
|---|---|
| Ddisc(T, qci) | Within the time T, the number of downlink PDCP PDUs not discarded during air interface transmission at the RLC/MAC layer of the QCI |
| N(T,qci) | Within the time T, the number of all PDCP PDUs entering the RLC layer of the Local eNB at the QCI |
| T | Statistical time |

The measurement result reported by the Local eNB needs to be distinguished with different QCIs.

b) The Macro eNB respectively counts the loss rate of PDCP SDU of separated DRBs at a PDCP layer within the preset time for each QCI, and the computational formula of the loss rate counted within the time T is as follows:

$$M\,(T, qci) = \left\lceil \frac{Ddisc(T, qci) * 1000000}{N(T, qci)} \right\rceil$$

wherein the definitions of the parameters are as shown in the following table 4:

Table 4

| M(T, qci) | Within the time T, the downlink packet loss rate of one QCI |
|---|---|
| Ddisc(T, qci) | Within the time T, the number of downlink PDCP SDUs not transmitted by the QCI to the Local eNB and discarded by the same |
| N(T, qci) | Within the time T, the number of all PDCP SDUs entering the PDCP layer |
| T | Statistical time |

And then, the above-mentioned M (T, qci) value and the statistic of the Packet Discard Rate in the DL reported by the Local eNB with the same QCI. Finally, the merged value is used as the statistical measurement quantity of the Packet Discard Rate in the DL of the separated DRBs on the Macro eNB and is notified to the OAM of the Macro eNB.

For the architecture 2 as shown in Fig. 7, in which the PDCP layer is located at the Local eNB, the time reference points for statistics and measurement are the same as those in the prior art, soon afterwards, the Local eNB reports the measurement result to the Macro eNB or the OAM.

(2) A measurement method for Packet Uu Loss Rate in the DL per QCI;

for the UE separated at the Local eNB, the Local eNB counts the packet loss rate of PDCP SDU transmitted over the Uu interface within the preset time per QCI, soon afterwards, the Local eNB reports a statistic to the Macro eNB to serve as the measurement result, or directly reports the statistic to the OAM.

The measurement result reported by the Local eNB is distinguished with different QCIs.

The computational formula of the Packet Uu Loss Rate in the DL per QCI counted within the time T is as follows:

$$M\ (T, qci) = \left\lceil \frac{Dloss(T, qci) * 1000000}{N(T, qci) + Dloss(T, qci)} \right\rceil$$

herein the definitions of the parameters are as shown in the following table 5:

Table 5

| M(T, qci) | Within the time T, the downlink packet loss rate of the UU interface of one QCI |
|---|---|
| Dloss(T, qci) | Within the time T, the number of downlink PDCP PDUs, in which at least a part of data blocks of the QCI has been sent over the air interface, but receives no confirmation and will not be sent |
| N(T, qci) | Within the time T, the number of downlink PDCP PDUs having been sent by the QCI over the air interface and receiving confirmation |
| T | Statistical time |

(3) A measurement method for Packet Loss Rate in the UL per QCI;

the measurement method of the measurement quantity is similar to that in the prior art, namely, for the UE separated at the Local eNB, the Macro eNB counts the packet loss rate of the uplink PDCP SDU within the preset time at the PDCP layer for each QCI, the time reference point is the upper SAP of the PDCP layer, the packet loss rate may be directly reported to the OAM, and reporting information is distinguished with different QCIs.

The reporting information is distinguished with different QCIs.

$$M\ (T, qci) = \left\lceil \frac{Dloss(T, qci) * 1000000}{N(T, qci)} \right\rceil$$

herein the definitions of the parameters are as shown in the table 6:

Table 6

| M(T, qci) | Within the time T, the UL packet loss rate of a QCI |
|---|---|
| Dloss(T, qci) | Within the time T, the number of lost serial numbers of UL PDCPs of the QCI |
| N(T,qci) | Within the time T, the total number (including the lost) of the serial numbers of the UL PDCPs of the QCI |
| T | Statistical measurement time |

For the architecture 2 as shown in Fig. 7, in which the PDCP layer is located at the Local eNB, the statistical approach is the same as that in the prior art.

Third embodiment:

(1) A measurement method for uplink Number of active UEs; the measurement object of the measurement quantity may be a cell.

A) For a Macro eNB with separated UE, the DRB information, in which a PDCP layer is located at the Macro eNB and an RLC layer and an MAC layer are located at a Local eNB, may be not counted, namely, only the uplink Number of active UEs of the Macro eNB is counted, including the number of uplink active UEs with all DRBs located at the Macro eNB and the number of uplink active UEs with a part of DRBs located at the Macro eNB.

The computational formula of the uplink Number of active UEs counted within a time T is as follows:

$$M\,(T, qci, p) = \left[ \frac{\sum_{\forall i} N(i, qci)}{I(T, p)} \right];$$

herein the definitions of the parameters are as shown in the table 7:

Table 7

| M(T, qci, p) | Within the time T, the average number of uplink active UEs of one QCI |
|---|---|
| N(i, qci) | At a moment i, the number of UEs, in which DRB has uplink buffer data at the PDCP/RLC/MAC layer, of the QCI. An eNB estimates according to a buffer state report of the terminal. |
| i | Within the time T, a sampling moment occurring once every P seconds |
| P | Sampling period |
| I(T, P) | Total number of sampling moments within the time T |
| T | Statistical time |

B) If the number of the uplink active UEs separated at the Local eNB needs to be counted, the MAC layer of the Local eNB may count the same and report a result to the Macro eNB or an OAM.

The statistical manner is similar to that in A), and the difference lies in that parameters are from the MAC of the Local eNB. If needing to be reported to the Macro eNB, the result is reported to the Macro eNB over an interface between the Macro eNB and the Local eNB, and the result may include the identifier list information of the UE, for enabling the Macro eNB to further summarize the conditions of a part of DRBs at the Macro eNB.

For the architecture 2 as shown in Fig. 7, in which the PDCP layer is located at the Local eNB, if the number of the uplink active UEs separated at the Local eNB needs to be counted, the MAC layer of the Local eNB may count the number and report the same to the Macro eNB or an OAM.

(2) A measurement method for downlink Number of active UEs;

A) for the Macro eNB with the separated UE, the DRB information, in which the PDCP layer is located at the Macro eNB and the RLC layer and the MAC layer are located at the Local eNB, may be not counted, namely, only the downlink Number of active UEs of the Macro eNB is counted, including the data of downlink active UEs with all DRBs located at the Macro eNB and the number of downlink active UEs with a part of DRBs located at the Macro eNB, for the UE with a part of DRBs located at the Macro eNB, only the number of the UEs, in which a corresponding downlink buffer (including buffer of the PDCP/RLC/MAC layer) per QCI on these DRBs is not empty.

The formula of the downlink Number of active UEs counted within the time T is as follows:

$$M(T, qci, p) = \left[ \frac{\sum_{\forall i} N(i, qci)}{I(T, p)} \right];$$

herein the definitions of the parameters are as shown in the following table 8:

Table 8

| M(T, qci, p) | Within the time T, the average number of downlink active UEs of one QCI |
|---|---|
| N(i, qci) | At a moment i, the number of UEs, in which DRB has downlink buffer data at the PDCP/RLC/MAC layer, of the QCI. |
| i | Within the time T, a sampling moment occurring once every P seconds |
| P | Sampling period |
| I(T, P) | Total number of sampling moments within the time T |
| T | Statistical time |

B) For the Macro eNB with the separated UE, the number of the downlink active UEs with all DRBs located at the Macro eNB is counted in the existing manner, while the number of the downlink active UEs with a part of DRBs located at the Macro eNB is counted by considering the non-empty condition of the corresponding Buffer (including the Buffer of the PDCP/RLC/MAC layer) per QCI on the part of DRBs located at the Macro eNB on the one hand, and considering the non-empty condition of the corresponding Buffer (the Buffer of the PDCP layer) per QCI on the part of DRBs located at the Local eNB on the other hand; the sum of the statistical numbers indicates the number of the downlink active UEs of the Macro eNB with the separated UE.

C) Different from B), the number of the downlink active UEs separated at the Local eNB needs to be counted (instead of merely counting the number of the UEs with non-empty buffer of PDCP at each QCI at each sampling moment within the time T), the Local eNB may count the number of the UEs with non-empty buffer (including the buffer of the RLC/MAC layer) corresponding to each QCI at each sampling moment within the time T, and report the number to the Macro eNB or the OAM.

The formula of the downlink Number of active UEs counted within the time T is as follows:

$$M(T, qci, p) = \left[ \frac{\sum_{\forall i} N(i, qci)}{I(T, p)} \right];$$

herein the definitions of the parameters are as shown in the table 9:

Table 9

| M(T, qci, p) | Within the time T, the average number of DL active UEs of one QCI |
|---|---|
| N(i, qci) | At a moment i, the number of UEs, in which DRB has uplink buffer data at the PDCP/RLC/MAC layer, of the QCI. |
| i | Within the time T, a sampling moment occurring once every P seconds |
| P | Sampling period |
| I(T,P) | Total number of sampling moments within the time T |
| T | Statistical time |

When the measurement result is reported to the Macro eNB, the measurement result is reported to the Macro eNB over an interface between the Macro eNB and the Local eNB, and the result may include the identifier list information of the UE, for enabling the Macro eNB to further summarize the number of the active UEs calculated at the PDCP layer.

For the architecture 2 as shown in Fig. 7, in which the PDCP layer is located at the Local eNB, if the number of the active UEs separated at the Local eNB needs to be counted, the Local eNB may count the number according to the prior art and report the same to the Macro eNB or the OAM.

Fourth embodiment:

A measurement method for packet delay in the DL; the measurement object of the measurement quantity may be a terminal, a cell or an E-RAB.

For UE separated at a Local eNB, since a PDCP layer of a DRB is located at a Macro eNB, and an RLC layer and an MAC layer are located at the Local eNB, when counting the measurement quantity of the packet delay in the DL, a time reference point when a data packet arrives may be set as the upper SAP of the RLC layer, the time reference point of successfully receiving the data packet is still set as the lower SAP of the MAC layer, such that the Local eNB counts the Packet Delay in the DL per QCI of the separated DRBs and reports the same to the Macro eNB or an OAM.

The formula of the packet delay in the DL counted within a time T is as follows:

$$M(T, qci) = \left\lceil \frac{\sum_{\forall i} tSend(i) - tArriv(i)}{I(T)} \right\rceil;$$

herein the definitions of the parameters are as shown in the following table 10:

Table 10

| M(T, qci) | Within the time T, the transmission delay of downlink PDCP SDU of one QCI |
|---|---|
| tArriv(i) | Time point of PDCP SDU arriving at the upper SAP of the RLC layer |
| tSend(i) | Time point when the lower SAP of the MAC layer receives the ACK feedback of the terminal on the last data block of PDCP SDUi |
| i | One PDCP SDU arriving at the upper SAP of the PDCP layer within the time T |
| I(T) | Total number of PDCP SDUs |
| T | Statistical time |

Information reported by the Local eNB is distinguished with different QCIs.

If the measurement request is from the Macro eNB, the Macro eNB may directly use the measurement result reported by the Local eNB and notifies the measurement result to the OAM of the Macro eNB, or the Macro eNB counts the residence time of the PDCP SDU of the separated DRBs at the Macro eNB within a period of time, and the specific formula is as follows:

$$M(T, qci) = \left\lceil \frac{\sum_{\forall i} tSend(i) - tArriv(i)}{I(T)} \right\rceil;$$

herein the definitions of the parameters are as shown in the following table 11:

Table 11

| M(T, qci) | Within the time T, the residence time of the PDCP SDU of one QCI |
|---|---|
| tArriv(i) | Arrival time point of PDCP SDUi |
| tSend(i) | Time point when the PDCP SDUi is sent to the Local eNB |

(continued)

| i | One PDCP SDU arriving at the upper SAP of the PDCP layer within the time T |
|---|---|
| I(T) | Total number of PDCP SDUs |
| T | Statistical time |

And then, the Macro eNB merges the above-mentioned M value, the statistic of packet delay in the DL with the same QCI from the Local eNB and the transmission delay of an M-L interface, namely, adding the three values. Finally, the merged value is used as the measurement value of the packet delay in the DL of the separated DRBs on the Macro and is notified to the OAM of the Macro eNB.

For the architecture 2 as shown in Fig. 7, in which the PDCP layer is located at the Local eNB, for the UE separated at the Local eNB, the counted time reference point and the successful received time reference point are the same as those in the prior art, such that the Local eNB counts the Packet Delay in the DL per QCI of the separated DRBs and reports the same to the Macro eNB or the OAM.

Fifth embodiment:

A measurement method for PRB usage; the measurement object of the measurement quantity may be a cell.

For UE separated at a Local eNB, the Local eNB may measure the measurement quantity on the SAP between an MAC layer and a layer 1 (L1) and reports a measurement result to a Macro eNB or its own OAM.

The PRB usage includes Total PRB usage and PRB usage per QCI, the Total PRB usage includes uplink Total PRB usage and downlink Total PRB usage; the PRB usage per QCI includes uplink PRB usage per QCI and downlink PRB usage per QCI.

The statistical approach of the uplink Total PRB usage is as follows: counting the proportion of uplink PRBs used within a time T in the total uplink PRBs;

the statistical approach of the downlink Total PRB usage is as follows: counting the proportion of downlink PRBs used within the time T in the total downlink PRBs;

the statistical approach of the uplink PRB usage per QCI is as follows: respectively counting the proportion of the uplink PRBs used within the time T in the total uplink PRBs for each QCI;

the statistical approach of the downlink PRB usage per QCI is as follows: respectively counting the proportion of the downlink PRBs used within the time T in the total downlink PRBs for each QCI.

If the measurement request is from the Macro eNB, the Macro eNB may directly use the measurement result reported by the Local eNB as the PRB usage value of the separated DRBs on the Macro eNB and notifies the PRB usage value to the OAM of the Macro eNB.

Sixth embodiment:

Measurement of Received Random Access Preambles; the measurement object of the measurement quantity may be a cell.

A Local eNB may measure the measurement quantity at the SAP between an MAC layer and LI and reports a measurement result to a Macro eNB or its own OAM.

Reporting information may be distinguished as follows: the number of dedicated preambles received within a preset time and the number of random preambles received within the preset time, and the number of random preambles may be further distinguished into two kinds of information, i.e. the number of low value zone preambles and the number of high value zone preambles.

See Fig.11, an embodiment of the present invention further provides a Local eNB, including:

a receiving component 110, configured to receive a measurement request;

a measuring component 111, configured to perform layer 2 measurement according to the measurement request;

a reporting component 112, configured to report a measurement result of the layer 2 measurement to a processing entity which sends the measurement request.

In this case, the receiving component 110 and the reporting component 112 may be transmission devices with receiving and sending functions, and the measuring component 111 may be such a device as a processor and the like.

Further, the measurement request includes at least one of the following information:

a measurement identifier, a measurement object, a measurement quantity, or a measurement reporting mode, herein the measurement identifier is used for uniquely identifying a measurement; the measurement object indicates the object of the layer 2 measurement; the measurement quantity indicates contents needing to be measured; the measurement reporting mode indicates the mode of reporting the measurement result.

Further, the object of the layer 2 measurement is a terminal, or an evolved radio access bearer E-RAB.

Further, the mode of reporting the measurement result is immediate reporting or periodical reporting or event trigger reporting.

Further, the measurement quantity of the layer 2 measurement performed by the measuring component 111 includes at least one of the following measurement quantities:

scheduled IP throughput,
data Loss,
number of active UEs,
downlink (DL) packet delay,
physical resource block (PRB) usage, or
number of Received Random Access Preambles.

Further, if the measurement quantity of the layer 2 measurement performed includes the Scheduled IP throughput, the measuring component 111 is configured to measure the Scheduled IP throughput according to the following method:

respectively counting the amount of data and scheduled time of a Packet Data Convergence Protocol, PDCP, Protocol Data Unit, PDU, scheduled within a preset time at a Radio Link Control, RLC, layer and the MAC layer, with an upper Service Access Point, SAP, of a Medium Access Control, MAC, layer as a time reference point, in order to obtain the Scheduled IP throughput according to the counted amount of data and the scheduled time; or, counting the scheduled time of a PDCP Service Data Unit SDU within the preset time at the MAC layer, with the upper SAP of the MAC layer as the time reference point, in order to obtain the Scheduled IP throughput according to the counted scheduled time and the actual amount of data of each PDCP SDU indicated by a Macro eNB.

Further, if the measurement quantity of the layer 2 measurement performed includes the Data Loss, the measuring component 111 is configured to measure the Data Loss according to the following method:
measuring the packet loss rate in the downlink (DL) per quality of service class identifier (QCI) according to the following method: counting the packet loss rate of PDCP PDU packet loss due to congestion within the preset time per QCI, with the upper SAP of the RLC layer as the time reference point; and/or, measuring the Uu Loss Rate in the downlink (DL) per QCI according to the following method: counting the packet loss rate of the PDCP SDU transmitted over a Uu interface within the preset time per QCI, with the upper SAP of the RLC layer as the time reference point.

Further, if the measurement quantity of the layer 2 measurement performed includes the Number of active UEs, the measuring component 111 is configured to measure the Number of active UEs according to the following method:

counting the number of uplink active terminals separated at the Local eNB within the preset time at the MAC layer; and/or,
counting the number of downlink active terminals separated at the Local eNB within the preset time at the MAC layer.

Further, the reporting component 112 is further configured to:
report the identifier information of the counted terminal to the entity sending the measurement request, when reporting the measurement result of the layer 2 measurement to the entity sending the measurement request.

Further, if the measurement quantity of the layer 2 measurement performed includes the DL Packet delay, the measuring component 111 is configured to measure the DL Packet delay according to the following method:
counting the transmission delay of the downlink PDCP SDU, with the upper SAP of the RLC layer as the reference point when a data packet arrives, and with the lower SAP of the MAC layer as the reference point of successfully receiving the data packet.

Further, if the measurement quantity of the layer 2 measurement performed includes the PRB usage, the measuring component 111 is configured to measure the PRB usage according to the following method:
counting the PRB usage within the preset time at the SAP between the MAC layer and a layer 1 (L1).

Further, if the measurement quantity of the layer 2 measurement performed includes the Received Random Access Preambles, the measuring component 111 is configured to measure the Received Random Access Preambles according to the following method:

counting the number of the Preambles received within the preset time at the SAP between the MAC layer and the layer 1.

Further, the entity sending the measurement request is a Macro eNB or an OAM.

See Fig. 12, an embodiment of the present invention further provides a processing device, including:

a requesting component 120, configured to send a measurement request of performing layer 2 measurement to a Local eNB;
a receiving component 121, configured to receive a measurement result reported by the local eNB and the measurement result is obtained by performing the layer 2 measurement according to the measurement request;
a processing component 122, configured to process the measurement result.

In this case, the requesting component 120 and the receiving component 121 may be transmission devices with receiving and sending functions, and the processing component 122 may be such a device as a processor and the like.

Further, the measurement request includes at least one of the following information:

a measurement identifier, a measurement object, a measurement quantity, or a measurement reporting mode, herein the measurement identifier is used for uniquely identifying a measurement; the measurement object indicates the object of the layer 2 measurement; the measurement quantity indicates contents needing to be measured; the measurement reporting mode indicates the mode of reporting the measurement result.

Further, the object of the layer 2 measurement may be a terminal, or a Local cell or a data radio access bearer DRB of the terminal.

Further, the mode of reporting the measurement result may be immediate reporting or periodical reporting or event trigger reporting.

Further, the measurement result includes the measurement result of at least one of the following measurement quantities:

scheduled IP throughput,
data loss,
number of active UEs,
downlink (DL) packet delay,
physical resource block (PRB) usage, or
number of received random access preambles.

Further, the processing component 122 is further configured to:
when the measurement result includes the measurement result of Packet Discard Rate in the DL per QCI and the processing entity is a Macro eNB, according to the following formula 1, for each QCI, respectively count the loss rate of PDCP SDU of separated DRBs at a PDCP layer within a preset time, merge the calculated loss rate with the Packet Discard Rate in the DL per QCI corresponding to the same QCI in the measurement result, and use the merged value as the Packet Discard Rate in the DL of the separated DRBs on the Macro eNB:

$$\text{formula 1: M (T, qci)} = \left\lceil \frac{Ddisc(T,qci)*1000000}{N(T,qci)} \right\rceil ;$$

herein M (T,qci) refers to the downlink packet loss rate of the QCI within the time T; Ddisc (T, qci) refers to the number of downlink PDCP SDUs having not been transmitted by the QCI to the Local eNB and discarded within the time T; N (T, qci) refers to the number of all PDCP SDUs of the QCI entering the PDCP layer within the time T; T refers to a statistical time.

Further, the processing component 122 is further configured to:
count the packet loss rate of the uplink PDCP SDU within the preset time at each QCI on the PDCP layer, with the upper SAP of the PDCP layer as a time reference point, when the measurement result includes no Packet Loss Rate in the UL per QCI.

Further, the processing component 122 is further configured to:

when the processing entity is the Macro eNB, count the number of uplink active terminals with all DRBs located in the Macro eNB and the number of uplink active terminals with a part of DRBs located in the Macro eNB within the preset time; and/or,

count the number of downlink active terminals with all DRBs located in the Macro eNB and the number of downlink active terminals with a part of DRBs located in the Macro eNB within the preset time.

Further, the processing component 122 is further configured to:
count the number of downlink active terminals with all DRBs located in the Macro eNB and the number of downlink active terminals with a part of DRBs located in the Macro eNB within the preset time according to the following method:

counting the number of the terminals with all DRBs located in the Macro eNB, and counting the number of the terminals, in which a part of DRBs is located in the Macro eNB and a downlink buffer of the corresponding PDCP layer or RLC layer or MAC layer per QCI on the part of DRBs located in the Macro eNB is not empty; or,
counting the number of the terminals with all DRBs located in the Macro eNB, and counting the number of the terminals, in which a part of DRBs is located in the Macro eNB, the downlink buffer of the corresponding PDCP layer or RLC layer or MAC layer per QCI on the part of DRBs located in the Macro eNB is not empty, and the downlink buffer of the corresponding PDCP layer per QCI on the part of DRBs located in the Macro eNB is not empty.

Further, the processing component 122 is further configured to: summarize the received uplink Number of active UEs and the counted number of the uplink active terminals, when the received measurement result includes uplink Number of active UEs;
summarize the received downlink Number of active UEs and the counted number of the downlink active terminals, when the received measurement result includes downlink Number of active UEs.

Further, the processing component 122 is further configured to:
when the measurement result includes the measurement result of DL Packet delay and the processing entity is the Macro eNB, count the residence time of the PDCP SDU of the separated DRBs at the Macro eNB within the preset time according to the following formula 2, merge the calculated residence time, the DL Packet delay in the measurement result, and the transmission delay of the interface between the Macro eNB and the Local eNB , and use the merged value as the DL Packet delay of the separated DRBs on the Macro eNB;

$$\text{formula 2: M (T, qci)} = \left[ \frac{\sum_{\forall i} tSend(i) - tArriv(i)}{I(T)} \right]$$

herein M (T,qci) refers to the residence time of the PDCP SDU of one QCI within the time T; tArriv (i) refers to the time point of the PDCP SDUi arriving at the upper SAP of the PDCP; tSend(i) refers to the time point when the PDCP SDUi is sent to the Local eNB; I(T) refers to the total number of the PDCP SDUs; T refers to a statistical time.

Further, the processing device further includes:

an indicating component 123 configured to, carry the actual amount of data of the PDCP SDU of the PDCP PDU in each downlink PDCP PDU sent to the Local eNB, when the processing entity is the Macro eNB;
for each uplink PDCP PDU reported by the Local eNB, indicate the Local eNB about the actual amount of data of the PDCP SDU of the PDCP PDU.

In this case, the indicating component 123 may be a transmission device with receiving and sending functions.

To sum up, in the solutions provided by embodiments of the present invention, the processing entity sends the measurement request of performing the layer 2 measurement to the Local eNB, after receiving the measurement request, the Local eNB performs the layer 2 measurement according to the measurement request and reports the measurement result of the layer 2 measurement to the processing entity which sends the measurement request, the processing entity receives the measurement result reported by the local eNB and the measurement result is obtained by performing the layer 2 measurement according to the measurement request, and processes the measurement result. Thus it can be seen that, in the present invention, by means of the measurement and report of the Local eNB, the method of performing the layer 2 measurement under the heterogeneous network including the Local eNB and the Macro eNB is achieved.

The present invention is described in accordance with the method and device (system) of the embodiments of the present invention and a flow chart and/or a block diagram of a computer program product. It should be understood that each flow and/or block in the flowchart and/or the block diagram and the combination of the flows and/or blocks in the flowchart and/or the block diagram may be implemented by computer program instructions. These computer program instructions may be provided to the processors of an all-purpose computer, a special-purpose computer, an embedded processor or other programmable data processing devices to generate a machine, in order to generate an apparatus used for achieving specified functions in one or multiple flows in the flowchart and/or one or multiple blocks in the block diagram, by means of the instructions implemented by the processors of computers or other programmable data processing devices.

These computer program instructions may also be stored in a computer readable memory capable of guiding the computers or the other programmable data processing devices to work in a particular manner, in order to enable the instructions stored in the computer readable memory to generate a product including an instruction apparatus, and the instruction apparatus achieves the specified functions in one or multiple flows in the flowchart and/or one or multiple blocks in the block diagram.

These computer program instructions may also be loaded on the computers or the other programmable data processing devices to execute a series of operation steps on the computers or the other programmable data processing devices to generate processing achieved by the computers, such that the instructions executed on the computers or the other programmable data processing devices provide operations used for achieving the appointed functions in one or multiple flows in the flowchart and/or one or multiple blocks in the block diagram.

Although the preferred embodiments of the present invention have been described, those skilled in the art may make additional changes and modifications to these embodiments, once mastering the basic inventive concept. Therefore, the appended claims are intended to incorporate the preferred embodiments and all changes and modifications within the scope of the present invention.

Apparently, those skilled in the art may make various variations and modifications to the present invention, without departing from the scope of the present invention which is defined by the appended claims.

**Claims**

1. A layer 2 measurement method in a heterogeneous network, performed by a Local Evolved Node B, eNB, whereby a UE in the heterogeneous network simultaneously aggregates resources of the Local eNB, and a Macro eNB, Radio Resource Control, RRC, connection of the UE is maintained under the Macro eNB, and the resources of the Local eNB are applied to data transmission, and the method comprises:

   performing (80), by the Local eNB, layer 2 measurement according to a measurement request of performing layer 2 measurement, after receiving the measurement request of performing layer 2 measurement;
   reporting (81), by the Local eNB, a measurement result of the layer 2 measurement to a processing entity which has sent the measurement request of performing layer 2 measurement.

2. The method according to claim 1, wherein the measurement quantity of the layer 2 measurement performed by the Local eNB comprises at least one of the following measurement quantities:

   Scheduled IP throughput,
   data loss,
   number of active UEs,
   downlink, DL, packet delay,
   Physical Resource Block, PRB, usage, or
   number of received random access preambles.

3. The method according to claim 2, wherein if the measurement quantity of the layer 2 measurement performed by the Local eNB comprises the Scheduled IP throughput, the method of measuring the Scheduled IP throughput by the Local eNB, comprises:

   respectively counting, by the Local eNB, the amount of data and scheduled time of a Packet Data Convergence Protocol, PDCP, Protocol Data Unit, PDU, scheduled within a preset time at a Radio Link Control, RLC, layer and a Medium Access Control, MAC, layer, with an upper service access point SAP of the MAC layer as a time reference point, in order to obtain the Scheduled IP throughput according to the counted amount of data and the scheduled time; or,
   counting, by the Local eNB, the scheduled time of a PDCP Service Data Unit, SDU, within the preset time at the MAC layer, with the upper SAP of the MAC layer as the time reference point, in order to obtain the Scheduled IP throughput according to the counted scheduled time and the actual amount of data of each PDCP SDU indicated by a Macro eNB;
   or
   wherein if the measurement quantity of the layer 2 measurement performed by the Local eNB comprises the data loss, the method of measuring the data loss by the Local eNB comprises:

measuring the Packet Discard Rate in the DL per QCI according to the following method: counting the packet loss rate of PDCP PDU packet loss due to congestion within the preset time per QCI, with the upper SAP of the RLC layer as the time reference point; and/or,

measuring the Packet Uu Loss Rate in the DL per QCI according to the following method: counting the packet loss rate of the PDCP SDU transmitted over an Uu interface within the preset time per QCI, with the upper SAP of the RLC layer as the time reference point;

or

wherein if the measurement quantity of the layer 2 measurement performed by the Local eNB comprises the Number of active UEs, the method of measuring the number of active UEs by the Local eNB comprises:

counting, by the Local eNB, the number of uplink active terminals separated at the Local eNB within the preset time at the MAC layer; and/or,

counting, by the Local eNB, the number of downlink active terminals separated at the Local eNB within the preset time at the MAC layer;

or

wherein if the measurement quantity of the layer 2 measurement performed by the Local eNB comprises the DL Packet delay, the method of measuring the DL Packet delay by the Local eNB comprises:

counting, by the Local eNB, the transmission delay of the downlink PDCP SDU, with the upper SAP of the RLC layer as the time reference point when a data packet arrives, and with the lower SAP of the MAC layer as the reference point of successfully receiving the data packet;

or

wherein if the measurement quantity of the layer 2 measurement performed by the Local eNB comprises the PRB usage, the method of measuring the PRB usage by the Local eNB comprises:

counting, by the Local eNB, the PRB usage within the preset time at the SAP between the MAC layer and a layer 1;

or

wherein if the measurement quantity of the layer 2 measurement performed by the Local eNB comprises the Received Random Access Preambles, the method of measuring the Received Random Access Preambles by the Local eNB comprises:

counting, by the Local eNB, the number of the Preambles received within the preset time at the SAP between the MAC layer and the layer 1.

4. A result processing method of layer 2 measurement in a heterogeneous network, whereby a UE in the heterogeneous network simultaneously aggregates resources of a Local Evolved Node B, eNB, and a Macro eNB, Radio Resource Control, RRC, connection of the UE is maintained under the Macro eNB, and the resources of the Local eNB are applied to data transmission, and the method comprises:

sending (90), by a processing entity, a measurement request of performing layer 2 measurement to the Local eNB;

receiving (91), by the processing entity, a measurement result reported by the local eNB and the measurement result is obtained by performing the layer 2 measurement according to the measurement request of performing layer 2 measurement;

processing (92), by the processing entity, the measurement result.

5. The method according to claim 4, wherein the measurement result comprises the measurement result of at least one of the following measurement quantities:

scheduled IP throughput,
data loss,
number of active UEs,
downlink, DL, packet delay,
physical resource block, PRB, usage, or
number of received random access preambles.

6. The method according to claim 5, wherein when the measurement result comprises the measurement result of Packet Discard Rate in the DL per QCI and the processing entity is a Macro eNB, processing, by the processing entity, the measurement result specifically comprises:
according to the following formula 1, for each QCI, respectively counting the loss rate of PDCP SDU of separated DRBs at a PDCP layer within a preset time, merging the calculated loss rate with the Packet Discard Rate in the DL per QCI corresponding to the same QCI in the measurement result, and using the merged value as the Packet Discard Rate in the DL of the separated DRBs on the Macro eNB:

$$\text{formula 1: M }(T, qci) = \left\lceil \frac{Ddisc(T, qci)*1000000}{N(T, qci)} \right\rceil;$$

wherein M (T, qci) refers to the downlink packet loss rate of the QCI within the time T; Ddisc (T, qci) refers to the number of downlink PDCP SDUs having not been transmitted by the QCI to the Local eNB and discarded within the time T; N (T, qci) refers to the number of all PDCP SDUs of the QCI entering the PDCP layer within the time T; T refers to a statistical time.

7. The method according to claim 5, wherein when the measurement result comprises no Packet Loss Rate in the UL per QCI, processing, by the processing entity, the measurement result comprises:
counting, by the Macro eNB, the packet loss rate of the uplink within the preset time at each QCI on the PDCP layer, with the upper SAP of the PDCP layer as a time reference point.

8. The method according to claim 5, wherein when the processing entity is the Macro eNB, the method further comprises:

counting, by the Macro eNB, the number of uplink active terminals with all DRBs located in the Macro eNB and the number of uplink active terminals with a part of DRBs located in the Macro eNB within the preset time; and/or, counting, by the Macro eNB, the number of downlink active terminals with all DRBs located in the Macro eNB and the number of downlink active terminals with a part of DRBs located in the Macro eNB within the preset time.

9. The method according to claim 8, wherein the counting, by the Macro eNB, the number of downlink active terminals with all DRBs located in the Macro eNB and the number of downlink active terminals with a part of DRBs located in the Macro eNB within the preset time, specifically comprises:

counting the number of the terminals with all DRBs located in the Macro eNB, and counting the number of the terminals, in which a part of DRBs is located in the Macro eNB and a downlink buffer of the corresponding PDCP layer or RLC layer or MAC layer per QCI on the part of DRBs located in the Macro eNB is not empty; or, counting the number of the terminals with all DRBs located in the Macro eNB, and counting the number of the terminals, in which a part of DRBs is located in the Macro eNB, the downlink buffer of the corresponding PDCP layer or RLC layer or MAC layer per QCI on the part of DRBs located in the Macro eNB is not empty, and the downlink buffer of the corresponding PDCP layer per QCI on the part of DRBs located in the Macro eNB is not empty.

10. The method according to claim 9, wherein when the received measurement result comprises uplink number of active UEs, processing, by the processing entity, the measurement result comprises: summarizing, by the Macro eNB, the received uplink number of active UEs and the counted number of the uplink active terminals;
when the received measurement result comprises downlink number of active UEs, processing, by the processing entity, the measurement result comprises: summarizing, by the Macro eNB, the received downlink number of active UEs and the counted number of the downlink active terminals.

11. The method according to claim 5, wherein when the measurement result comprises the measurement result of DL Packet delay and the processing entity is the Macro eNB, processing, by the processing entity, the measurement result specifically comprises:
counting the residence time of the PDCP SDU of the separated DRBs at the Macro eNB within the preset time according to the following formula 2, merging the calculated residence time, the DL Packet delay in the measurement result, and the transmission delay of the interface between the Macro eNB and the Local eNB , and using the merged value as the DL Packet delay of the separated DRBs on the Macro eNB;

$$\text{formula 2: M}\,(T,\,qci) = \left[ \frac{\sum\limits_{\forall i} tSend(i) - tArriv(i)}{I(T)} \right]$$

wherein M (T, qci) refers to the residence time of the PDCP SDU of one QCI within the time T; tArriv (i) refers to the time point of the PDCP SDUi arriving at the upper SAP of the PDCP; tSend(i) refers to the time point when the PDCP SDUi is sent to the Local eNB; I(T) refers to the total number of the PDCP SDUs; T refers to a statistical time.

12. The method according to claim 4, further comprising:

when the processing entity is a Macro eNB, carrying, by the Macro eNB, the actual amount of data of the PDCP SDU of the PDCP PDU in each downlink PDCP PDU sent to the Local eNB;
for each uplink PDCP PDU reported by the Local eNB, indicating, by the Macro eNB, the Local eNB about the actual amount of data of the PDCP SDU of the PDCP PDU.

13. A Local Evolved Node B, eNB, in a heterogeneous network, whereby a UE in the heterogeneous network simultaneously aggregates resources of the Local eNB, and a Macro eNB, Radio Resource Control, RRC, connection of the UE is maintained under the Macro eNB, and the resources of the Local eNB are applied to data transmission, and the Local eNB comprises:

a receiving component (110), configured to receive a measurement request of performing layer 2 measurement;
a measuring component (111), configured to perform layer 2 measurement according to the measurement request of performing layer 2 measurement;
a reporting component (112), configured to report a measurement result of the layer 2 measurement to a processing entity which has sent the measurement request of performing layer 2 measurement.

14. The Local eNB according to claim 13, wherein the measurement quantity of the layer 2 measurement performed by the measuring component (111) comprises at least one of the following measurement quantities:

scheduled IP throughput,
data loss,
number of active UEs,
downlink, DL, packet delay,
physical resource block, PRB, usage, or
number of received random access preambles.

15. The Local eNB according to claim 14, wherein if the measurement quantity of the layer 2 measurement performed by the measuring component (111) comprises the Scheduled IP throughput, the measuring component is configured to measure the Scheduled IP throughput according to the following method:

respectively counting the amount of data and scheduled time of a Packet Data Convergence Protocol, PDCP, Protocol Data Unit, PDU, scheduled within a preset time at a Radio Link Control, RLC, layer and a Medium Access Control, MAC layer, with an upper service access point SAP of the MAC layer as a time reference point, in order to obtain the Scheduled IP throughput according to the counted amount of data and the scheduled time; or,
counting the scheduled time of a PDCP Service Data Unit, SDU, within the preset time at the MAC layer, with the upper SAP of the MAC layer as the time reference point, in order to obtain the Scheduled IP throughput according to the counted scheduled time and the actual amount of data of each PDCP SDU indicated by a Macro eNB;
or
wherein if the measurement quantity of the layer 2 measurement performed by the measuring component comprises the data loss, the measuring component is configured to measure the data loss according to the following method:

measuring the Packet Discard Rate in the DL per QCI according to the following method: counting the packet loss rate of PDCP PDU packet loss due to congestion within the preset time per QCI, with the upper SAP of the RLC layer as the time reference point; and/or,

measuring the Packet Uu Loss Rate in the DL per QCI according to the following method: counting the packet loss rate of the PDCP SDU transmitted over a Uu interface within the preset time per QCI, with the upper SAP of the RLC layer as the time reference point;

or

wherein if the measurement quantity of the layer 2 measurement performed by the measuring component comprises the number of active UEs, the measuring component is configured to measure the number of active UEs according to the following method:

counting the number of uplink active terminals separated at the Local eNB within the preset time at the MAC layer; and/or,

counting the number of downlink active terminals separated at the Local eNB within the preset time at the MAC layer;

or

wherein if the measurement quantity of the layer 2 measurement performed by the measuring component comprises the DL Packet delay, the measuring component is configured to measure the DL Packet delay according to the following method:

counting the transmission delay of the downlink PDCP SDU, with the upper SAP of the RLC layer as the time reference point when a data packet arrives, and with the lower SAP of the MAC layer as the reference point of successfully receiving the data packet;

or

wherein if the measurement quantity when performing the layer 2 measurement comprises the PRB usage, the measuring component is configured to measure the PRB usage according to the following method:

counting the PRB usage within the preset time at the SAP between the MAC layer and a layer 1;

or

wherein if the measurement quantity of the layer 2 measurement performed by the measuring component comprises the Received Random Access Preambles, the measuring component is configured to measure the Received Random Access Preambles according to the following method:

counting the number of the Preambles received within the preset time at the SAP between the MAC layer and the layer 1.

## Patentansprüche

1. Schicht-2-Messungsverfahren in einem heterogenen Netzwerk, das von einem Local Evolved Node B, eNB, durchgeführt wird, wobei ein UE in dem heterogenen Netzwerk gleichzeitig Ressourcen des Local eNB und einer Macro eNB vereinigt, Radio Resource Control, RRC, Anschluss des UE unter dem Macro eNB beibehalten wird, und die Ressourcen des Local eNB auf Datenübertragung angewendet werden, und das Verfahren Folgendes aufweist:

Durchführen (80), durch den Local eNB, einer Schicht-2-Messung gemäß einer Messungsanforderung zum Durchführen von Schicht-2-Messung nach dem Empfangen der Messungsanforderung zum Durchführen einer Schicht-2-Messung;

Melden (81), durch den Local eNB, eines Messergebnisses der Schicht-2-Messung an eine Prozesseinheit, welche die Messungsanforderung zum Durchführen von Schicht-2-Messung gesendet hat.

2. Verfahren nach Anspruch 1, wobei die Messgröße der von dem Local eNB durchgeführten Schicht-2-Messung mindestens eine der folgenden Messgrößen aufweist:

Planmäßiger IP Durchsatz,
Datenverlust,
Anzahl aktiver UEs,
Downlink, DL, Paketverzögerung,
Physical Resource Block, PRB, Nutzung, oder
Anzahl von empfangenen Direktzugriffspräambeln.

3. Verfahren nach Anspruch 2, wobei, wenn die Messgröße der durch den Local eNB durchgeführten Schicht-2-Messung den planmäßigen IP Durchsatz enthält, das Verfahren zum Messen des planmäßigen IP Durchsatzes durch den Local eNB Folgendes aufweist:

jeweils Zählen, durch den Local eNB, der Menge an Daten und geplanter Zeit einer Packet Data Convergence Protocol, PDCP, Protocol Data Unit, PDU, die innerhalb einer vorgegebenen Zeit an einer Radio Link Control, LRC, Schicht und einer Medium Access Control, MAC, Schicht geplant ist, mit einem oberen Servicezugangspunkt SAP der MAC Schicht als Zeitbezugspunkt, um den planmäßigen IP Durchsatz gemäß der gezählten Datenmenge und der geplanten Zeit zu erhalten; oder

Zählen, durch den Local eNB, der geplanten Zeit einer PDCP Service Data Unit, SDU, innerhalb der vorgegebenen Zeit an der MAC Schicht, mit dem oberen SAP der MAC Schicht als dem Zeitbezugspunkt, um den planmäßigen IP Durchsatz gemäß der gezählten geplanten Zeit und der tatsächlichen Datenmenge jeder von einem Macro eNB angezeigten PDCP SDU zu erhalten;

oder

wobei, wenn die Messgröße der durch den Local eNB durchgeführten Schicht-2-Messung den Datenverlust enthält, das Verfahren zur Messung des Datenverlustes durch den Local eNB Folgendes aufweist:

Messen der Packet Discard Rate in dem DL pro QCI gemäß dem folgenden Verfahren:
Zählen der Paketverlustrate von PDCP PDU Paketverlust aufgrund von Überlastung innerhalb der vorgegebenen Zeit pro QCI mit dem oberen SAP der RLC Schicht als dem Zeitbezugspunkt; und/oder
Messen der Packet Uu Loss Rate in dem DL pro QCI gemäß dem folgenden Verfahren:
Zählen der Paketverlustrate der über eine Uu Schnittstelle übertragenen PDCP SDU innerhalb der vorgegebenen Zeit pro QCI mit dem oberen SAP der RLC Schicht als Zeitbezugspunkt;

oder

wobei, wenn die Messgröße der durch den Local eNB durchgeführten Schicht-2-Messung die Anzahl an aktiven UEs enthält, das Verfahren zum Messen der Anzahl an aktiven UEs durch den Local eNB Folgendes aufweist:

Zählen, durch den Local eNB, der Anzahl an aktiven Uplink-Terminals, die an dem Local eNB getrennt sind, innerhalb der vorgegebenen Zeit an der MAC Schicht; und/oder
Zählen, durch den Local eNB, der Anzahl an aktiven Downlink-Terminals, die an dem Local eNB getrennt sind, innerhalb der vorgegebenen Zeit an der MAC Schicht;

oder

wobei, wenn die Messgröße der durch den Local eNB durchgeführten Schicht-2-Messung die DL Paketverzögerung aufweist, das Verfahren zum Messen der DL Paketverzögerung durch den Local eNB Folgendes aufweist:
Zählen, durch den Local eNB, der Übertragungsverzögerung der Downlink PDCP SDU, mit dem oberen SAP der RLC Schicht als Zeitbezugspunkt, wenn ein Datenpaket ankommt, und mit dem unteren SAP der MAC Schicht als Bezugspunkt von erfolgreichem Empfang des Datenpaketes;

oder

wobei, wenn die Messgröße der durch den Local eNB durchgeführten Schicht-2-Messung die PRB Nutzung enthält, das Verfahren zum Messen der PRB Nutzung durch den Local eNB Folgendes aufweist:
Zählen, durch den Local eNB, der PRB Nutzung innerhalb der vorgegebenen Zeit an dem SAP zwischen der MAC Schicht und einer Schicht 1;

oder

wobei, wenn die Messgröße der durch den Local eNB durchgeführten Schicht-2-Messung die empfangenen Direktzugriffspräambeln enthält, das Verfahren zum Messen der empfangenen Direktzugriffspräambeln durch den Local eNB Folgendes aufweist:
Zählen, durch den Local eNB, der Anzahl der innerhalb der vorgegebenen Zeit empfangenen Präambeln an dem SAP zwischen der MAC Schicht und der Schicht 1.

4.  Ergebnisverarbeitungsverfahren von Schicht-2-Messung in einem heterogenen Netzwerk, wobei ein UE in dem heterogenen Netzwerk gleichzeitig Ressourcen eines Local Evolved Node B, eNB, und eines Macro eNB vereinigt, Radio Resource Control, RRC, Anschluss des UE unter dem Macro eNB beibehalten wird und die Ressourcen des Local eNB auf Datenübertragung angewendet werden, und das Verfahren Folgendes aufweist:
Senden (90), durch eine Verarbeitungseinheit, einer Messungsanforderung zum Durchführen von Schicht-2-Messung an den Local eNB;

Empfangen (91), durch die Verarbeitungseinheit, eines durch den lokalen eNB gemeldeten Messergebnisses, und das Messergebnis wird durch die Durchführung der Schicht-2-Messung gemäß der Messungsanforderung zur Durchführung von Schicht-2-Messung erhalten;
Verarbeiten (92), durch die Verarbeitungseinheit, des Messergebnisses.

5. Verfahren nach Anspruch 4, wobei das Messergebnis das Messergebnis von mindestens einer der folgenden Messgrößen enthält:

> planmäßiger IP Durchsatz,
> Datenverlust,
> Anzahl aktiver UEs,
> Downlink, DL, Paketverzögerung,
> Physical Resource Block, PRB, Nutzung, oder
> Anzahl an empfangenen Direktzugriffspräambeln.

6. Verfahren nach Anspruch 5, wobei, wenn das Messergebnis das Messergebnis der Packet Discard Rate in dem DL pro QCI aufweist und die Verarbeitungseinheit ein Macro eNB ist, das Verarbeiten des Messergebnisses durch die Verarbeitungseinheit speziell Folgendes aufweist:
gemäß der folgenden Formel 1, für jeden QCI, jeweils Zählen der Verlustrate von PDCP SDU von getrennten DRBs an einer PDCP Schicht innerhalb einer vorgegebenen Zeit, Zusammenführen der berechneten Verlustrate mit der Packet Discard Rate in dem DL pro QCI entsprechend demselben QCI in dem Messergebnis, und Verwenden des zusammengeführten Wertes als die Packet Discard Rate in dem DL der getrennten DRBs auf dem Macro eNB:

$$\text{formula 1: } M\,(T,\,qci) = \left\lceil \frac{Ddisc(T,qci)*1000000}{N(T,qci)} \right\rceil ;$$

wobei sich M (T, qci) auf die Downlink Paketverlustrate des QCI innerhalb der Zeit T bezieht; Ddisc (T, qci) sich auf die Anzahl an Downlink PDCP SDUs bezieht, die nicht durch den QCI an den Local eNB übertragen und innerhalb der Zeit T verworfen worden sind; N (T, qci) sich auf die Anzahl aller PDCP SDUs des QCI bezieht, die in die PDCP Schicht innerhalb der Zeit T eintritt; T sich auf eine statistische Zeit bezieht.

7. Verfahren nach Anspruch 5, wobei, wenn das Messergebnis keine Paketverlustrate in dem UL pro QCI enthält, Verarbeiten des Messergebnisses durch die Verarbeitungseinheit Folgendes aufweist:
Zählen, durch den Macro eNB, der Paketverlustrate des Uplinks innerhalb der vorgegebenen Zeit an jedem QCI auf der PDCP Schicht, mit dem oberen SAP der PDCP Schicht als Zeitbezugspunkt.

8. Verfahren nach Anspruch 5, wobei, wenn die Verarbeitungseinheit der Macro eNB ist, das Verfahren weiterhin Folgendes aufweist:

> Zählen, durch den Macro eNB, der Anzahl an aktiven Uplink-Terminals, wobei alle DRBs in dem Macro eNB liegen, und der Anzahl von aktiven Uplink-Terminals, wobei ein Teil von DRBs in dem Macro eNB liegt, innerhalb der vorgegebenen Zeit,
> Zählen, durch den Macro eNB, der Anzahl an aktiven Downlink-Terminals, wobei alle DRBs in dem Macro eNB liegen, und der Anzahl an aktiven Downlink-Terminals, wobei ein Teil von DRBs in dem Macro eNB liegt, innerhalb der vorgegebenen Zeit.

9. Verfahren nach Anspruch 8, wobei das Zählen, durch den Macro eNB, der Anzahl an aktiven Downlink-Terminals, wobei alle DRBs in dem Macro eNB liegen, und der Anzahl an aktiven Downlink-Terminals, wobei ein Teil von DRBs in dem Macro eNB liegt, innerhalb der vorgegebenen Zeit speziell Folgendes aufweist:

> Zählen der Anzahl der Terminals, wobei alle DRBs in dem Macro eNB liegen, und Zählen der Anzahl der Terminals, in welchen ein Teil von DRBs in dem Macro eNB liegt und ein Downlink-Puffer der entsprechenden PDCP Schicht oder RLC Schicht oder MAC Schicht pro QCI seitens in dem Macro eNB liegender DRBs nicht leer ist; oder
> Zählen der Anzahl der Terminals, wobei alle DRBs in dem Macro eNB liegen, und Zählen der Anzahl der Terminals, in welchen ein Teil von DRBs in dem Macro eNB liegt, der Downlink-Puffer der entsprechenden PDCP Schicht oder RLC Schicht oder MAC Schicht pro QCI seitens in dem Macro eNB liegender DRBs nicht leer ist, und der Downlink-Puffer der entsprechenden PDCP Schicht pro QCI seitens in dem Macro eNB liegender DRBs nicht leer ist.

10. Verfahren nach Anspruch 9, wobei, wenn das empfangene Messergebnis eine Uplink-Anzahl an aktiven UEs enthält, das Verarbeiten des Messergebnisses durch die Verarbeitungseinheit Folgendes aufweist: Zusammenfassen, durch den Macro eNB, der empfangenen Uplink-Anzahl an aktiven UEs und der gezählten Anzahl der aktiven Uplink-Terminals;
wenn das empfangene Messergebnis eine Downlink-Anzahl an aktiven UEs enthält, das Verarbeiten des Messergebnisses durch die Verarbeitungseinheit Folgendes aufweist: Zusammenfassen, durch den Macro eNB, der empfangenen Downlink-Anzahl an aktiven UEs und der gezählten Anzahl der aktiven Downlink-Terminals.

11. Verfahren nach Anspruch 5, wobei, wenn das Messergebnis das Messergebnis von DL Paketverzögerung enthält und die Verarbeitungseinheit der Macro eNB ist, das Verarbeiten des Messergebnisses durch die Verarbeitungseinheit speziell Folgendes aufweist:
Zählen der Verweilzeit der PDCP SDU der getrennten DRBs an dem Macro eNB innerhalb der vorgegebenen Zeit gemäß der folgenden Formel 2, Zusammenführen der berechneten Verweilzeit, der DL Paketverzögerung in dem Messergebnis und der Übertragungsverzögerung der Schnittstelle zwischen dem Macro eNB und dem Local eNB, und Verwenden des zusammengeführten Wertes als die DL Paketverzögerung der getrennten DRBs auf dem Macro eNB;

$$\text{formula 2: } M\left(T, qci\right) = \left\lceil \frac{\sum_{\forall i} tSend(i) - tArriv(i)}{I(T)} \right\rceil$$

wobei sich M (T, qci) auf die Verweilzeit der PDCP SDU von einem QCI innerhalb der Zeit T bezieht; tArriv (i) sich auf den Zeitpunkt der an dem oberen SAP des PDCP eintreffenden PDCP SDUi bezieht; tSend(i) sich auf den Zeitpunkt bezieht, zu dem die PDCP SDUi an den Local eNB gesendet wird; I(T) sich auf die Gesamtzahl der PDCP SDUs bezieht; T sich auf eine statistische Zeit bezieht.

12. Verfahren nach Anspruch 4, weiterhin mit Folgendem:

wenn die Verarbeitungseinheit ein Macro eNB ist, Übertragen, durch den Macro eNB, der tatsächlichen Menge an Daten der PDCP SDU der PDCP SDU in jede an den Local eNB gesendete Downlink-PDCP PDU;
für jede von dem Local eNB gemeldete Uplink-PDCP PDU, Anzeigen, durch den Macro eNB, des Local eNB über die tatsächliche Datenmenge der PDCP SDU der PDCP PDU.

13. Ein Local Evolved Node B, eNB, in einem heterogenen Netzwerk, wobei ein UE in dem heterogenen Netzwerk gleichzeitig Ressourcen des Local eNB und eines Macro eNB vereinigt, Radio Resource Control, RRC, Anschluss des UE unter dem Macro eNB beibehalten wird und die Ressourcen des Local eNB auf Datenübertragung angewendet werden, und der Local eNB Folgendes aufweist:

ein Empfangsbauteil (110), das dazu ausgeführt ist, eine Messanforderung zum Durchführen von Schicht-2-Messung zu empfangen;
ein Messbauteil (111), das dazu ausgeführt ist, Schicht-2-Messung gemäß der Messanforderung zum Durchführen von Schicht-2-Messung durchzuführen;
ein Meldebauteil (112), das dazu ausgeführt ist, ein Messergebnis der Schicht-2-Messung an eine Verarbeitungseinheit zu melden, die die Messanforderung zum Durchführen von Schicht-2-Messung gesendet hat.

14. Der Local eNB nach Anspruch 13, wobei die Messgröße der durch das Messbauteil (111) durchgeführten Schicht-2-Messung mindestens eine der nachfolgenden Messgrößen aufweist:

planmäßiger IP Durchsatz,
Datenverlust,
Anzahl an aktiven UEs,
Downlink, DL, Paketverzögerung,

Physical Resource Block, PRB, Nutzung, oder
Anzahl an empfangenen Direktzugriffspräambeln.

15. Der Local eNB nach Anspruch 14, wobei, wenn die Messgröße der durch das Messbauteil (111) durchgeführten Schicht-2-Messung den planmäßigen IP Durchsatz enthält, das Messbauteil dazu ausgeführt ist, den planmäßigen IP Durchsatz gemäß dem folgenden Verfahren zu messen:

jeweils Zählen der Menge an Daten und geplanter Zeit einer Packet Data Convergence Protocol, PDCP, Protocol Data Unit, PDU, die innerhalb einer vorgegebenen Zeit an einer Radio Link Control, RLC, Schicht und einer Medium Access Control, MAC, Schicht mit einem oberen Servicezugangspunkt SAP der MAC Schicht als ein Zeitbezugspunkt geplant ist, um den planmäßigen IP Durchsatz gemäß der gezählten Menge an Daten und der geplanten Zeit zu erhalten; oder,
Zählen der geplanten Zeit einer PDCP Service Data Unit, SDU, innerhalb der vorgegebenen Zeit an der MAC Schicht, mit dem oberen SAP der MAC Schicht als dem Zeitbezugspunkt, um den planmäßigen IP Durchsatz gemäß der gezählten geplanten Zeit und der von einem Macro eNB angezeigten, tatsächlichen Menge an Daten jeder PDCP SDU zu erhalten;
oder
wobei, wenn die Messgröße der durch das Messbauteil durchgeführten Schicht-2-Messung den Datenverlust aufweist, das Messbauteil dazu ausgeführt ist, den Datenverlust gemäß dem folgenden Verfahren zu messen:

Messen der Packet Discard Rate in dem DL pro QCI gemäß dem folgenden Verfahren:
Zählen der Paketverlustrate von PDCP PDU Paketverlust aufgrund von Überlastung innerhalb der vorgegebenen Zeit pro QCI, mit dem oberen SAP der RLC Schicht als dem Zeitbezugspunkt; und/oder
Messen der Packet Uu Loss Rate in dem DL pro QCI gemäß dem folgenden Verfahren:
Zählen der über eine Uu Schnittstelle übertragenen Paketverlustrate der PDCP SDU innerhalb der vorgegebenen Zeit pro QCI, mit dem oberen SAP der RLC Schicht als dem Zeitbezugspunkt;

oder
wobei, wenn die Messgröße der durch das Messbauteil durchgeführten Schicht-2-Messung die Anzahl an aktiven UEs enthält, das Messbauteil dazu ausgeführt ist, die Anzahl an aktiven UEs gemäß dem folgenden Verfahren zu messen:

Zählen der Anzahl von an dem Local eNB getrennten, aktiven Uplink-Terminals innerhalb der vorgegebenen Zeit an der MAC Schicht; und/oder
Zählen der Anzahl von an dem Local eNB getrennten, aktiven Downlink-Terminals innerhalb der vorgegebenen Zeit an der MAC Schicht;

oder
wobei, wenn die Messgröße der durch das Messbauteil durchgeführten Schicht-2-Messung die DL Paketverzögerung enthält, das Messbauteil dazu ausgeführt ist, die DL Paketverzögerung gemäß dem folgenden Verfahren zu messen:
Zählen der Übertragungsverzögerung der Downlink PDCP SDU, mit dem oberen SAP der RLC Schicht als dem Zeitbezugspunkt, wenn ein Datenpaket ankommt, und mit dem unteren SAP der MAC Schicht als dem Bezugspunkt von erfolgreichem Empfangen des Datenpaketes;
oder
wobei, wenn die Messgröße bei Durchführung der Schicht-2-Messung die PRB Nutzung enthält, das Messbauteil dazu konfiguriert ist, die PRB Nutzung gemäß dem folgenden Verfahren zu messen:
Zählen der PRB Nutzung innerhalb der vorgegebenen Zeit an dem SAP zwischen der MAC Schicht und einer Schicht 1;
oder
wobei, wenn die Messgröße der von dem Messbauteil durchgeführten Schichte-Messung die empfangenen Direktzugriffspräambeln (Received Random Access Preambles) enthält, das Messbauteil dazu ausgeführt ist, die Received Random Access Preambles gemäß dem folgenden Verfahren zu messen:
Zählen der Anzahl der innerhalb der vorgegebenen Zeit an dem SAP zwischen der MAC Schicht und der Schicht 1 empfangenen Präambeln.

**Revendications**

1. Procédé de mesure de couche 2 dans un réseau hétérogène, mis en oeuvre par un noeud B évolué, eNB, local en sorte qu'un UE dans le réseau hétérogène agrège simultanément des ressources de l'eNB local, et une connexion de contrôle de ressources radio, RRC, de macro eNB de l'UE est maintenue sous le macro eNB, et les ressources de l'eNB local sont appliquées à une transmission de données, et le procédé comporte les étapes consistant à :

réaliser (80), par l'eNB local, une mesure de couche 2 en fonction d'une requête de mesure pour réaliser une mesure de couche 2, après réception de la requête de mesure pour réaliser une mesure de couche 2 ;
rapporter (81), par l'eNB local, un résultat de mesure de la mesure de couche 2 à une entité de traitement qui a envoyé la requête de mesure pour réaliser une mesure de couche 2.

2. Procédé selon la revendication 1, dans lequel la grandeur de mesure de la mesure de couche 2 réalisée par l'eNB local comporte au moins l'une des grandeurs de mesure suivantes :

débit IP planifié,
perte de données,
nombre d'UE actifs,
retard de paquet en liaison descendante, DL,
utilisation de blocs de ressources physiques, PRB, ou
nombre de préambules d'accès aléatoire reçus.

3. Procédé selon la revendication 2, dans lequel si la grandeur de mesure de la mesure de couche 2 réalisée par l'eNB local comporte le débit IP planifié, le procédé de mesure du débit IP planifié par l'eNB local, comporte les étapes consistant à :

comptabiliser respectivement, par l'eNB local, la quantité de données et de temps planifié d'une unité de données de protocole, PDU, d'un protocole de convergence de données en paquets, PDCP, planifiée sur une durée prédéfinie sur une couche de commande de liaison radio, RLC, et une couche de commande d'accès au support, MAC, avec un point d'accès au service, SAP, supérieur de la couche MAC en tant que point de référence temporelle, afin d'obtenir le débit IP planifié en fonction de la quantité de données comptabilisée et du temps planifié ; ou,
comptabiliser, par l'eNB local, le temps planifié d'une unité de données de service, SDU, de PDCP sur la durée prédéfinie sur la couche MAC, avec le SAP supérieur de la couche MAC en tant que point de référence temporelle, afin d'obtenir le débit IP planifié en fonction de la durée planifiée comptabilisée et de la quantité réelle de données de chaque SDU de PDCP indiquée par un macro eNB ;
ou
dans lequel, si la grandeur de mesure de la mesure de couche 2 réalisée par l'eNB local comporte la perte de données, le procédé de mesure de la perte de données par l'eNB local comporte les étapes consistant à :

mesurer le taux de suppression de paquets en DL par QCI selon le procédé suivant : comptabiliser le taux de perte de paquets de la perte de paquets de la PDU de PDCP due à une congestion sur la durée prédéfinie par QCI, avec le SAP supérieur de la couche RLC en tant que point de référence temporelle ; et/ou,
mesurer le taux de perte Uu de paquets en DL par QCI selon le procédé suivant : comptabiliser le taux de perte de paquets de la SDU de PDCP transmise via une interface Uu sur la durée prédéfinie par QCI, avec le SAP supérieur de la couche RLC en tant que point de référence temporelle ;

ou
dans lequel, si la grandeur de mesure de la mesure de couche 2 réalisée par l'eNB local comporte le nombre d'UE actifs, le procédé de mesure du nombre d'UE actifs par l'eNB local comporte les étapes consistant à :
comptabiliser, par l'eNB local, le nombre de terminaux actifs en liaison montante séparés au niveau de l'eNB local sur la durée prédéfinie sur la couche MAC ; et/ou, comptabiliser, par l'eNB local, le nombre de terminaux actifs en liaison descendante séparés au niveau de l'eNB local sur la durée prédéfinie sur la couche MAC ;
ou
dans lequel, si la grandeur de mesure de la mesure de couche 2 réalisée par l'eNB local comporte le retard des paquets en DL, le procédé de mesure du retard de paquets en DL par l'eNB local comporte l'étape consistant à :
comptabiliser, par l'eNB local, le retard de transmission de la SDU de PDCP en liaison descendante, avec le SAP supérieur de la couche RLC en tant que point de référence temporelle lorsqu'un paquet de données arrive, et avec le SAP inférieur de la couche MAC en tant que point de référence de la réception réussie du paquet de données ;

ou

dans lequel, si la grandeur de mesure de la mesure de couche 2 réalisée par l'eNB local comporte l'utilisation de PRB, le procédé de mesure de l'utilisation de PRB par l'eNB local comporte l'étape consistant à :

comptabiliser, par l'eNB local, l'utilisation de PRB sur la durée prédéfinie au niveau du SAP entre la couche MAC et une couche 1 ;

ou

dans lequel, si la grandeur de mesure de la mesure de couche 2 réalisée par l'eNB local comporte les préambules d'accès aléatoire reçus, le procédé de mesure des préambules d'accès aléatoire reçus par l'eNB local comporte l'étape consistant à :

comptabiliser, par l'eNB local, le nombre des préambules reçus sur la durée prédéfinie au niveau du SAP entre la couche MAC et la couche 1.

4. Procédé de traitement de résultat d'une mesure de couche 2 dans un réseau hétérogène, en sorte qu'un UE dans le réseau hétérogène agrège simultanément des ressources d'un noeud B évolué, eNB, local et une connexion de contrôle de ressources radio, RRC, de macro eNB de l'UE est maintenue sous le macro eNB, et les ressources de l'eNB local sont appliquées à une transmission de données, et le procédé comporte les étapes consistant à :

envoyer (90) à l'eNB local, par une entité de traitement, une requête de mesure pour réaliser une mesure de couche 2 ;

recevoir (91), par l'entité de traitement, un résultat de mesure rapporté par l'eNB local et le résultat de mesure est obtenu en réalisant la mesure de couche 2 en fonction de la requête de mesure pour réaliser une mesure de couche 2 ;

traiter (92), par l'entité de traitement, le résultat de mesure.

5. Procédé selon la revendication 4, dans lequel le résultat de mesure comporte le résultat de mesure d'au moins une des grandeurs de mesure suivantes :

débit IP planifié,

perte de données,

nombre d'UE actifs,

retard de paquet en liaison descendante, DL,

utilisation de blocs de ressources physiques, PRB, ou

nombre de préambules d'accès aléatoire reçus.

6. Procédé selon la revendication 5, dans lequel lorsque le résultat de mesure comporte le résultat de mesure du taux de suppression de paquets en DL par QCI et que l'entité de traitement est un macro eNB, le traitement, par l'entité de traitement, du résultat de mesure comporte spécifiquement l'étape consistant à :

d'après la formule 1 suivante, pour chaque QCI, comptabiliser respectivement le taux de perte de SDU de PDCP de DRB séparées sur une couche PDCP sur une durée prédéfinie, fusionner le taux de perte calculé avec le taux de suppression de paquets en DL par QCI correspondant au même QCI dans le résultat de mesure, et utiliser la valeur fusionnée comme taux de suppression de paquets en DL des DRB séparées sur le macro eNB :

$$\texttt{formula 1: M } (T, qci) = \left\lceil \frac{Ddisc(T, qci) * 1000000}{N(T, qci)} \right\rceil ;$$

dans laquelle M (T, qci) représente le taux de perte de paquets en liaison descendante du QCI sur la durée T ; Ddisc (T, qci) représente le nombre de SDU de PDCP en liaison descendante n'ayant pas été transmises par le QCI à l'eNB local et supprimées sur la durée T ; N (T, qci) représente le nombre de toutes les SDU de PDCP du QCI entrant dans la couche PDCP sur la durée T ; T représente un temps statistique.

7. Procédé selon la revendication 5, dans lequel lorsque le résultat de mesure ne comporte aucun taux de perte de paquets en UL par QCI, le traitement, par l'entité de traitement, du résultat de mesure comporte l'étape consistant à : comptabiliser, par le macro eNB, le taux de perte de paquets de la liaison montante sur la durée prédéfinie sur chaque QCI sur la couche PDCP, avec le SAP supérieur de la couche PDCP en tant que point de référence temporelle.

**8.** Procédé selon la revendication 5, dans lequel lorsque l'entité de traitement est le macro eNB, le procédé comporte en outre les étapes consistant à :

comptabiliser, par le macro eNB, le nombre de terminaux actifs en liaison montante avec toutes les DRB situées dans le macro eNB et le nombre de terminaux actifs en liaison montante avec une partie des DRB situées dans le macro eNB sur la durée prédéfinie ; et/ou,
comptabiliser, par le macro eNB, le nombre de terminaux actifs en liaison descendante avec toutes les DRB situées dans le macro eNB et le nombre de terminaux actifs en liaison descendante avec une partie des DRB situées dans le macro eNB sur la durée prédéfinie.

**9.** Procédé selon la revendication 8, dans lequel la comptabilisation, par le macro eNB, du nombre de terminaux actifs en liaison descendante avec toutes les DRB situées dans le macro eNB et du nombre de terminaux actifs en liaison descendante avec une partie des DRB situées dans le macro eNB sur la durée prédéfinie, comporte spécifiquement les étapes consistant à :

comptabiliser le nombre des terminaux avec toutes les DRB situées dans le macro eNB, et comptabiliser le nombre des terminaux, dans lequel une partie des DRB est située dans le macro eNB et un tampon de liaison descendante de la couche PDCP ou de la couche RLC ou de la couche MAC correspondante par QCI sur la partie des DRB situées dans le macro eNB n'est pas vide ; ou,
comptabiliser le nombre des terminaux avec toutes les DRB situées dans le macro eNB, et comptabiliser le nombre des terminaux, dans lesquels une partie des DRB est située dans le macro eNB, le tampon de liaison descendante de la couche PDCP ou de la couche RLC ou de la couche MAC correspondante par QCI sur la partie des DRB situées dans le macro eNB n'est pas vide, et le tampon de liaison descendante de la couche PDCP correspondante par QCI sur la partie des DRB situées dans le macro eNB n'est pas vide.

**10.** Procédé selon la revendication 9, dans lequel lorsque le résultat de mesure reçu comporte un nombre d'UE actifs en liaison montante, le traitement, par l'entité de traitement, du résultat de mesure comporte l'étape consistant à :

récapituler, par le macro eNB, le nombre reçu d'UE actifs en liaison montante et le nombre comptabilisé de terminaux actifs en liaison montante ;
lorsque le résultat de mesure reçu comporte un nombre d'UE actifs en liaison descendante, le traitement, par l'entité de traitement, du résultat de mesure comporte l'étape consistant à : récapituler, par le macro eNB, le nombre reçu d'UE actifs en liaison descendante et le nombre comptabilisé de terminaux actifs en liaison descendante.

**11.** Procédé selon la revendication 5, dans lequel lorsque le résultat de mesure comporte le résultat de mesure du retard de paquet en DL et que l'entité de traitement est le macro eNB, le traitement, par l'entité de traitement, du résultat de mesure comporte spécifiquement l'étape consistant à :
comptabiliser le temps de séjour de la SDU de PDCP des DRB séparées au niveau macro eNB sur la durée prédéfinie d'après la formule 2 suivante, fusionner le temps de séjour calculé, le retard de paquet en DL dans le résultat de mesure, et le retard de transmission de l'interface entre le macro eNB et l'eNB local, et utiliser la valeur fusionnée comme retard de paquet en DL des DRB séparées sur le macro eNB ;

$$\text{formula 2: } M\ (T,\ qci)\ = \left\lceil \frac{\sum\limits_{\forall i} tSend(i) - tArriv(i)}{I(T)} \right\rceil$$

dans laquelle M (T, qci) représente le temps de séjour de la SDU de PDCP d'un QCI sur la durée T ; tArriv (i) représente le point temporel où la SDUi de PDCP arrive sur le SAP supérieur du PDCP ; tSend(i) représente le point temporel où la SDUi de PDCP est envoyée à l'eNB local ; I(T) représente le nombre total des SDU de PDCP ; T représente un temps statistique.

**12.** Procédé selon la revendication 4, comportant en outre les étapes consistant à :

lorsque l'entité de traitement est un macro eNB, transporter, par le macro eNB, la quantité réelle de données de la PDU de PDCP dans chaque SDU de PDCP de liaison descendante envoyée à l'eNB local ;

pour chaque PDU de PDCP de liaison montante rapportée par l'eNB local, indiquer, par le macro eNB, à l'eNB local la quantité réelle de données de la SDU de PDCP de la PDU de PDCP.

13. Noeud B évolué, eNB, local dans un réseau hétérogène, en sorte qu'un UE dans le réseau hétérogène agrège simultanément des ressources de l'eNB local, et une connexion de contrôle de ressources radio, RRC, de macro eNB de l'UE est maintenue sous le macro eNB, et les ressources de l'eNB local sont appliquées à une transmission de données, et l'eNB local comporte :

un composant de réception (110), configuré pour recevoir une requête de mesure pour réaliser une mesure de couche 2 ;

un composant de mesure (111), configuré pour réaliser une mesure de couche 2 en fonction de la requête de mesure pour réaliser une mesure de couche 2 ;

un composant de rapport (112), configuré pour rapporter un résultat de mesure de la mesure de couche 2 à une entité de traitement qui a envoyé la requête de mesure pour réaliser une mesure de couche 2.

14. eNB local selon la revendication 13, dans lequel la grandeur de mesure de la mesure de couche 2 réalisée par le composant de mesure (111) comporte au moins une des grandeurs de mesure suivantes :

débit IP planifié,
perte de données,
nombre d'UE actifs,
retard de paquet en liaison descendante, DL,
utilisation de blocs de ressources physiques, PRB, ou
nombre de préambules d'accès aléatoire reçus.

15. eNB local selon la revendication 14, dans lequel, si la grandeur de mesure de la mesure de couche 2 réalisée par le composant de mesure (111) comporte le débit IP planifié, le composant de mesure est configuré pour mesurer le débit IP planifié d'après le procédé suivant :

comptabiliser respectivement la quantité de données et de temps planifié d'une unité de données de protocole, PDU, d'un protocole de convergence de données en paquets, PDCP, planifiée sur une durée prédéfinie sur une couche de commande de liaison radio, RLC, et une couche de commande d'accès au support, MAC, avec un point d'accès au service, SAP, supérieur de la couche MAC en tant que point de référence temporelle, afin d'obtenir le débit IP planifié en fonction de la quantité comptabilisée de données et de temps planifié ; ou, comptabiliser le temps planifié d'une unité de données de service, SDU, de PDCP sur la durée prédéfinie sur la couche MAC, avec le SAP supérieur de la couche MAC en tant que point de référence temporelle, afin d'obtenir le débit IP planifié en fonction du temps planifié comptabilisé et de la quantité réelle de données de chaque SDU de PDCP indiquée par un macro eNB ;

ou

dans lequel, si la grandeur de mesure de la mesure de couche 2 réalisée par le composant de mesure comporte la perte de données, le composant de mesure est configuré pour mesurer la perte de données d'après le procédé suivant :

mesurer le taux de suppressions de paquets en DL par QCI selon le procédé suivant : comptabiliser le taux de perte de paquets de la perte de paquets de la SDU de PDCP due à une congestion sur la durée prédéfinie par QCI, avec le SAP supérieur de la couche RLC en tant que point de référence temporelle ; et/ou, mesurer le taux de perte Uu de paquets en DL par QCI selon le procédé suivant : comptabiliser le taux de perte de paquets de la SDU de PDCP transmise via une interface Uu sur la durée prédéfinie par QCI, avec le SAP supérieur de la couche RLC en tant que point de référence temporelle ;

ou

dans lequel, si la grandeur de mesure de la mesure de couche 2 réalisée par le composant de mesure comporte le nombre d'UE actifs, le composant de mesure est configuré pour mesurer le nombre d'UE actifs selon le procédé suivant :

comptabiliser le nombre de terminaux actifs en liaison montante séparés au niveau de l'eNB local sur la durée prédéfinie sur la couche MAC ; et/ou,

comptabiliser le nombre de terminaux actifs en liaison descendante séparés au niveau de l'eNB local sur la durée prédéfinie sur la couche MAC ;

ou

dans lequel, si la grandeur de mesure de la mesure de couche 2 réalisée par le composant de mesure comporte le retard de paquets en DL, le composant de mesure est configuré pour mesurer le retard de paquets en DL selon le procédé suivant :

comptabiliser le retard de transmission de la SDU de PDCP en liaison descendante, avec le SAP supérieur de la couche RLC en tant que point de référence temporelle lorsqu'un paquet de données arrive, et avec le SAP inférieur de la couche MAC en tant que point de référence de la réception réussie du paquet de données ;

ou

dans lequel, si la grandeur de mesure lorsque de la réalisation de la mesure de couche 2 comporte l'utilisation de PRB, le composant de mesure est configuré pour mesurer l'utilisation de PRB selon le procédé suivant :

comptabiliser l'utilisation de PRB sur la durée prédéfinie au niveau du SAP entre la couche MAC et une couche 1 ;

ou

dans lequel, si la grandeur de mesure de la mesure de couche 2 réalisée par le composant de mesure comporte les préambules d'accès aléatoire reçus, le composant de mesure est configuré pour mesurer les préambules d'accès aléatoire reçus selon le procédé suivant :

comptabiliser le nombre des préambules d'accès aléatoire reçus sur la durée prédéfinie au niveau du SAP entre la couche MAC et la couche 1.

Fig.1

Fig.2

Fig.3

Fig.4

1 — M-L interface control plane
2 — S1-MME
3 — M-L interface user plane RRC
4 — RRC
5 — DRB
6 — S1-U

Fig.5

Fig.6

| | X2-C |
| | S1-MME |
| | S1-U |
| | RRC |
| | DRB |

Fig.7

After receiving a measurement request, the Local eNB performs layer 2 measurement according to the measurement request    80

The Local eNB reports a measurement result of the layer 2 measurement to a processing entity which sends the measurement request    81

Fig.8

90

A processing entity sends a measurement request to
the local eNB

91

The processing entity receives a measurement result
reported by the local eNB and obtained by performing
the layer 2 measurement according to the
measurement request

92

The processing entity processes the measurement
result

Fig.9

| Local eNB | | Macro eNB |

1 measurement request message

2 implementing
L2 measurement

3 measurement reporting message

Fig.10a

Fig.10b

Fig.11

Fig.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   GB 2486727 A

**Non-patent literature cited in the description**

•   3rd Generation Partnership Project; Technical Specification Group Radio Access Network; Evolved Universal Terrestrial Radio Access (E-UTRA); Layer-2 Measurements (Release 10). *3GPP DRAFT,* 28 September 2011